(19) Europäisches Patentamt / European Patent Office / Office européen des brevets

(11) EP 3 527 595 B1

(12) # EUROPEAN PATENT SPECIFICATION

(45) Date of publication and mention of the grant of the patent:
**12.07.2023 Bulletin 2023/28**

(21) Application number: **17859511.2**

(22) Date of filing: **13.10.2017**

(51) International Patent Classification (IPC):
***C08G 18/08*** (2006.01) ***C08G 18/00*** (2006.01)
***C08G 18/28*** (2006.01) ***C08G 18/78*** (2006.01)
***C08G 18/80*** (2006.01) ***C09D 175/04*** (2006.01)
***C07C 265/14*** (2006.01) ***C08G 18/77*** (2006.01)
***C08G 18/79*** (2006.01) ***C08G 18/72*** (2006.01)
***C08G 18/38*** (2006.01) ***C08G 18/62*** (2006.01)
***C08K 5/00*** (2006.01) ***C08K 5/01*** (2006.01)
***C08K 5/101*** (2006.01) ***C08K 5/205*** (2006.01)

(52) Cooperative Patent Classification (CPC):
**C09D 175/04; C08G 18/0823; C08G 18/0828; C08G 18/0866; C08G 18/2825; C08G 18/283; C08G 18/285; C08G 18/288; C08G 18/3885; C08G 18/6225; C08G 18/725; C08G 18/771; C08G 18/7837; C08G 18/792; C08G 18/8045;**

(Cont.)

(86) International application number:
**PCT/JP2017/037264**

(87) International publication number:
**WO 2018/070532 (19.04.2018 Gazette 2018/16)**

(54) **ISOCYANATE COMPOSITION, AQUEOUS DISPERSION OF ISOCYANATE COMPOSITION, PRODUCTION METHOD THEREFOR, COATING COMPOSITION, AND COATING FILM**

ISOCYANATZUSAMMENSETZUNG, WÄSSRIGE DISPERSION VON ISOCYANAT, HERSTELLUNGSVERFAHREN DAFÜR, BESCHICHTUNGSZUSAMMENSETZUNG UND BESCHICHTUNGSFILM

COMPOSITION D'ISOCYANATE, DISPERSION AQUEUSE DE COMPOSITION D'ISOCYANATE, SON PROCÉDÉ DE PRODUCTION, COMPOSITION DE REVÊTEMENT ET FILM DE REVÊTEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.10.2016 JP 2016203091**
**14.10.2016 JP 2016203096**
**14.10.2016 JP 2016203142**
**14.10.2016 JP 2016203143**

(43) Date of publication of application:
**21.08.2019 Bulletin 2019/34**

(60) Divisional application:
**20158717.7 / 3 686 229**

(73) Proprietor: **ASAHI KASEI KABUSHIKI KAISHA**
**Tokyo 100-0006 (JP)**

(72) Inventors:
- **FUKUCHI, Takashi**
  **Tokyo 101-8101 (JP)**
- **MIWA, Yuichi**
  **Tokyo 101-8101 (JP)**

(74) Representative: **Strehl Schübel-Hopf & Partner**
**Maximilianstrasse 54**
**80538 München (DE)**

(56) References cited:
**EP-A1- 1 535 939** **EP-A2- 2 900 722**
**WO-A1-2004/078819** **WO-A1-2004/078819**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**JP-A- H11 323 125**
**JP-A- 2000 044 649**
**JP-A- 2000 044 649**
**JP-A- 2003 261 763**
**JP-A- 2015 214 599**

(52) Cooperative Patent Classification (CPC): (Cont.)
**C08G 18/8054; C08G 18/8064; C08G 18/807; C08G 18/8083; C08G 18/8096**

## Description

### TECHNICAL FIELD

The present invention relates to an aqueous dispersion of isocyanate composition, and a production method thereof, a coating composition, and a coating film.

### BACKGROUND OF THE INVENTION

A coating film obtained from a coating composition containing, as a curing agent, a polyisocyanate composition obtained from an aliphatic diisocyanate or an alicyclic diisocyanate is excellent in weather resistance, chemical resistance, abrasion resistance, or the like.

In recent years, the technical development for decreasing the viscosity of polyisocyanate to be used as a curing agent has been actively made accompanying with the growth of the environmental protection of the earth, because the decrease in the viscosity of polyisocyanate reduces the amount of an organic solvent used in a coating composition (Patent Document 1 or 2). However, there is a case where the decrease in the number of isocyanate groups deteriorates the drying properties in these technology.

In order to solve the above-mentioned problem, the technique for decreasing the viscosity while maintaining the functional number of isocyanate groups has been disclosed (Patent Document 3).

In addition, making a coating composition be aqueous has been desired from the viewpoint of the protection of global environment or the industrial safety and health.

For example, a method for introducing a nonionic hydrophilic group into a polyisocyanate (Patent Document 4, 5 or 6) makes it possible to disperse the polyisocyanate in water.

Patent Document 7 discloses a polyisocyanate composition providing the water dispersibility thereto by mixing an allophanate group-containing polyisocyanate with an isocyanurate group-containing polyisocyanate and an alkylene oxide adduct of a monool.

Patent Document 8 discloses a technique for improving the durability of a resultant coating film by realizing aqueous dispersion by decreasing the viscosity while maintaining the isocyanate group number without adding any hydrophilic groups has been disclosed.

### DOCUMENTS OF RELATED ART

#### Patent Documents

Patent Document 1: Japanese Unexamined Patent Application Publication No. Hei 05-222007
Patent Document 2: Japanese Patent No. 3055197
Patent Document 3: Japanese Patent No. 5178200
Patent Document 4: Japanese Unexamined Patent Application Publication No. Hei 05-222150
Patent Document 5: Japanese Unexamined Patent Application Publication No. Hei 09-328654
Patent Document 6: Japanese Unexamined Patent Application Publication No. 2000-44649
Patent Document 7: Japanese Unexamined Patent Application Publication No.2003-073447
Patent Document 8: Japanese Unexamined Patent Application Publication No. Hei 11-286649 Patent Document 9: Japanese Patent Application JP 20000-44649.
Patent Document 10: WO2004/078819.

### SUMMARY OF THE INVENTION

### PROBLEMS TO BE SOLVED BY THE INVENTION

However, there is a probability that the water dispersibility of the polyisocyanate composition disclosed in Patent Document 4 or 5 or the water-resistance of a resultant coating film deteriorates due to the high viscosity thereof.

The polyisocyanate composition disclosed in Patent Document 6 has a problem in which the water-resistance of a resultant coating film deteriorates depending on the mole ratio of added nonionic hydrophilic groups.

The polyisocyanate composition disclosed in Patent Document 7 has a problem in which the drying property of a resultant coating film becomes insufficient.

The technique disclosed in Patent Document 8 has a problem in terms of the stability of the dispersibility in

water. Patent Documents 9 discloses water-dispersible polyisocyanates based on NTI which have been modified with a hydrophilic compound. Patent Document 10 discloses water-dispersible polyisocyanates based on LTI, which have also been modified with a hydrophilic compound and which are used for making aqueous coating compositions.

The present invention has been made in view of the above-mentioned circumstances, and aims to provide an isocyanate composition which has a low viscosity and is excellent in the water dispersibility, drying property, water-resistance, wet-adhesion resistance, and external appearance of a resultant coating film.

MEANS TO SOLVE THE PROBLEMS

(1) An aqueous dispersion of isocyanate composition, containing: water; and an isocyanate composition dispersed in water, wherein

the isocyanate composition contains at least one selected from the group consisting of triisocyanate compounds of the general formula (IV) and diisocyanate compounds of the general formula (V), and
a volume-average dispersion particle diameter of the isocyanate composition is 200 nm to 8000 nm.

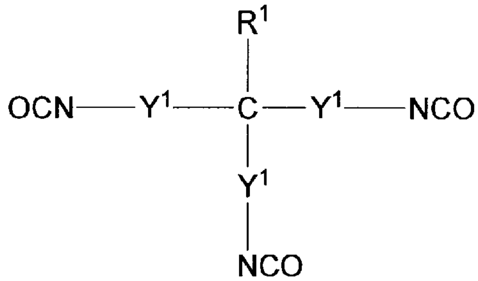

(IV)

In the general formula (IV), a plurality of $Y^1$s each independently represent a single bond, or a divalent C1-20 hydrocarbon group which may have at least one selected from the group consisting of an ester structure and an ether structure. The plurality of $Y^1$s may be identical to or different from each other. $R^1$ represents a hydrogen atom or a monovalent C1-12 hydrocarbon group.

**$OCN\text{-}Y^2\text{-}NCO$** (V)

In the general formula (V), $Y^2$ represents a divalent C1-20 hydrocarbon group having an ester structure.

(2) The aqueous dispersion of isocyanate composition according to (1), wherein the isocyanate composition contains a triisocyanate compound of the general formula (IV), and at least one of the plurality of $Y^1$s contains an ester structure.

(3) The aqueous dispersion of isocyanate composition according to (1) or (2), wherein a hydrophilic group is added to a part of isocyanate groups of the triisocyanate compound of the general formula (IV) or the diisocyanate compound of the general formula (V), and a content of the hydrophilic group relative to the total amount of the isocyanate composition is 0.5% by mass to 5% by mass.

(4) The aqueous dispersion of isocyanate composition according to any one of (1) to (3), wherein the isocyanate composition further contains a polyisocyanate compound having an allophanate structure of general formula (VI).

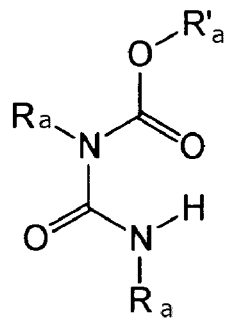

(VI)

In the general formula (VI), Ra represents an organic group. At least one of a plurality of Ra represents a group of general formula (VII). The plurality of Ra may be identical to or different from each other. R'a represents a residual group obtained by removing one hydroxyl group from a monovalent or more-valent alcohol.

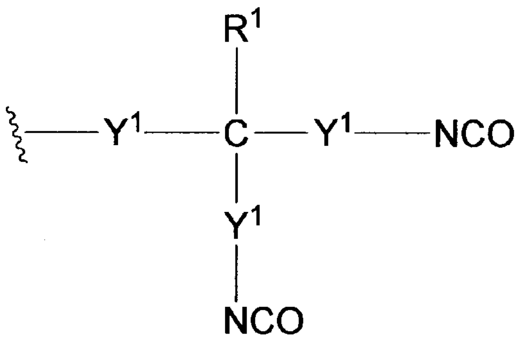

(VII)

In the general formula (VII), a plurality of $Y^1$s each independently represent a single bond, or a divalent C1-20 hydrocarbon group which may have an ester structure and/or an ether structure. The plurality of $Y^1$s may be identical to or different from each other. However, at least one of the plurality of $Y^1$s has an ester structure. $R^1$ represents a hydrogen atom or a monovalent C1-12 hydrocarbon group. A wavy line represents a binding site.

(5) The aqueous dispersion of isocyanate composition according to any one of (1) to (4), further containing an organic solvent.

(6) The aqueous dispersion of isocyanate composition according to (5), wherein an aqueous solubility of the organic solvent at 20°C is 5% by mass or more.

(7) The aqueous dispersion of isocyanate composition according to any one of (1) to (6), wherein the isocyanate composition further contains a polyisocyanate obtained by polymerizing diisocyanates having an aliphatic, alicyclic, or aromatic isocyanate group.

(8) A method for producing an aqueous dispersion of isocyanate composition of any one of (1) to (7), containing a step in which an isocyanate composition is added dropwise into water while conducting mixing by stirring using a stirring blade.

(9) A coating composition containing: an aqueous dispersion of isocyanate composition of any one of (1) to (7); and a polyol.

(10) A coating film formed by curing the coating composition of (9).

EFFECTS OF THE INVENTION

According to the present invention, an aqueous isocyanate composition having a low viscosity and an excellent dispersion stability in water, drying property, water-resistance, wet-adhesion resistance, and external appearance of a resultant coating film, a coating composition containing the same, and a coating film formed by curing the coating composition are provided.

EMBODIMENTS FOR CARRYING OUT THE INVENTION

Embodiments of the present invention will be described below.

In the present specification, the term "polyisocyanate" means a polymer in which a plurality of monomers having at least one isocyanate group (-NCO) is bound.

In the present specification, the term "polyol" means a compound having at least two hydroxy groups (-OH).

In the present specification, the term "(meth)acryl" encompasses methacryl and acryl, and the term "(meth)acrylate" encompasses methacrylate and acrylate, unless otherwise indicated.

<Isocyanate composition> (not according to the invention)

An isocyanate composition according to a first embodiment not according to the present invention contains an isocyanate compound of general formula (I).

$$(A)_m - R - (NCO)_n \qquad (I)$$

In the general formula (I), A represents a residual group containing a reactant structure of an active hydrogen-containing hydrophilic compound and an isocyanate group, and the sum (m+n) of the average number m and the average number n is 3. However, m is an integer of 1 or more. The term "average number" means an average value of the number of isocyanate groups present in a molecule.

R represents a group of general formula (II).

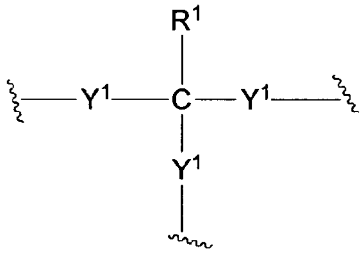

(I I)

In the general formula (II), a plurality of $Y^1$s each independently represent a single bond or a divalent C1-20 hydrocarbon group which may have an ester structure and/or an ether structure. The plurality of $Y^1$s may be identical to or different from each other. $R^1$ represents a hydrogen atom or a monovalent C1-12 hydrocarbon group. A wavy line represents a binding site.

At least one of the plurality of $Y^1$s preferably have an ester structure.

[A] In the general formula (I), A represents a residual group containing a reactant structure of an active hydrogen-containing hydrophilic compound and an isocyanate group, and may be represented by the following formula (A-1), (A-2) or (A-3), for example.

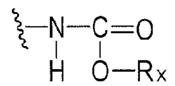

(A-1)

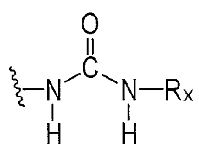

(A-2)

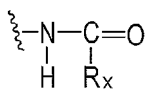

(A-3)

In the formulae, each Rx independently represents a residual group obtained by removing an active hydrogen-containing functional group from the active hydrogen-containing hydrophilic compound, or a group of the following general formula (iii), and a wavy line represents a bond.

$$\sim\!(Y^4 - O)_y - R^2 \qquad (iii)$$

In the formula, $Y^4$ represents a C1-4 alkylene group, and $R^2$ represents a C1-8 alkyl group, and y is 3 to 20.

[m, n]

In the general formula (1), the sum (m+n) of the average number m and the average number n is 3. However, m is an integer of 1 or more. n is an integer of 0 or more.

[R]

In the general formula (I), R represents a group of general formula (II).

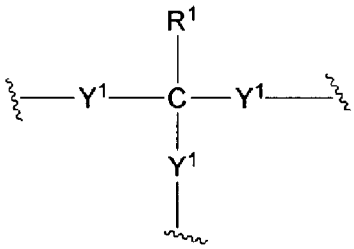

( I I )

In the general formula (II), a plurality of $Y^1$s each independently represent a single bond or a divalent C1-20 hydrocarbon group which may have an ester structure and/or an ether structure. The plurality of $Y^1$s may be identical to or different from each other. $R^1$ represents a hydrogen atom or a C1-12 (preferably C1-5) monovalent hydrocarbon group. A wavy line represents a bond.

At least one of the plurality of $Y^1$s preferably have an ester structure.

General formula (II) [$Y^1$]

In the general formula (1), a plurality of $Y^1$s each independently represent a single bond, or, a C1-20 (preferably C1-10, and more preferably C1-5) divalent hydrocarbon group which may have an ester structure [-C(=O)-O-] and/or an ether structure (-O-). The plurality of $Y^1$s may be identical to or different from each other.

At least one of the plurality of $Y^1$s preferably have an ester structure.

Examples of the divalent C1-20 hydrocarbon group having an ester structure and/or an ether structure include groups represented by $-(CH_2)_{n1}-X-(CH_2)_{n2}-$ (wherein n1 and n2 each independently represent an integer of 0 to 10 (preferably 1 to 4), provided that both n1 and n2 do not represent 0 simultaneously, and at least one of n1 and n2 which binds with NCO preferably represents 1 or more, and X represents an ester group or an ether group).

[$R^1$]

$R^1$ represents a hydrogen atom or a C1-12 (preferably C1-6, and more preferably C1-3) monovalent hydrocarbon group. The hydrocarbon group as $R^1$ is not particularly limited, and examples thereof include alkyl groups, alkenyl groups, and alkynyl groups, and the hydrocarbon group is preferably an alkyl group. $R^1$ preferably represents a hydrogen atom.

The molecular weight of a triisocyanate as a base of the group of the formula (II) is preferably 139 to 1000.

The lower limit of the molecular weight is more preferably 150 or more, even more preferably 180 or more, and particularly preferably 200 or more.

The upper limit of the molecular weight is more preferably 800 or less, even more preferably 600 or less, and particularly preferably 400 or less.

The crystalline nature can be suppressed by limiting the molecular weight to the lower limit or more, and the low viscosity can be easily obtained by limiting the molecular weight to the upper limit or less.

The hydrocarbon group of the plurality of $Y^1$s preferably has an aliphatic group and/or an aromatic group so as to decrease the viscosity of the triisocyanate. In addition, $R^1$ preferably represents hydrogen.

The hydrocarbon group of the plurality of $Y^1$s preferably has an aliphatic group and/or an alicyclic group so as to improve the weather resistance when used as a curing agent of a coating composition.

At least one of the plurality of $Y^1$s preferably has an ester group so as to improve the heat resistance, separately.

At least one of the plurality of $Y^1$s is preferably constituted by a hydrocarbon group having an ether structure so as to improve the hydrolysis resistance, separately.

The isocyanate compound of general formula (I) may be obtained, for example, by reacting an isocyanate group of a triisocyanate compound, such as 4-isocyanatemethyl-1,8-octamethylenediisocyanate (hereinafter, referred to as NTI, the molecular weight thereof is 251), 1,3,6-hexamethylene triisocyanate (hereinafter, referred to as HTI, the molecular weight thereof is 209) disclosed in Japanese Unexamined Patent Application Publication No. Sho 57-198760,

bis(2-isocyanatoethyl)2-isocyanato glutarate (hereinafter, referred to as GT1, the molecular weight thereof is 311) disclosed in Japanese Examined Patent Application Publication No. Hei 4-1033, or lysine triisocyanate (hereinafter, referred to as LTI, the molecular weight thereof is 267) disclosed in Japanese Unexamined Patent Application Publication No. Sho 53-135931, with an active hydrogen-containing hydrophilic compound.

Among the triisocyanate compounds, NTI, GTI, or LTI is preferable, NTI or LTI is more preferable, and LTI is particularly preferable, from the viewpoint of improving the reactivity of isocyanate groups.

The triisocyanate may be obtained by subjecting an amino acid derivative or an amine such as an ether amine or an alkyl triamine to isocyanate-forming reaction. Examples of the amino acid derivative include 2,5-diaminovaleric acid, 2,6-diaminohexanoic acid, asparaginic acid, and glutamic acid. These amino acids are diamine monocarboxylates or monoamine dicarboxylate, and therefore these amino acids can be made to be amines having an ester group by esterifying a carboxyl group thereof with an alkanol amine such as ethanol amine. Thus, a triamine having a resultant ester group can be made to be a triisocyanate having an ester structure by phosgenation or the like.

Examples of the ether amine include polyoxyalkylenetriamine manufactured by MITSUI FINE CHEMICAL Inc., under the trade name of "T403". The ether amines are triamines, and may be made to be triisocyanate having an ether structure by phosgenation of amine or the like.

Examples of the alkyl triamine include triisocyanatononane (4-aminomethyl-1,8-octanediamine). The alkyl amine is a triamine, and can be made to be a triisocyanate having only hydrocarbon by phosgenation of the amine.

The isocyanate compound of general formula (1) is preferably a compound represented by any one of the following general formula (I)-1 to (I)-3.

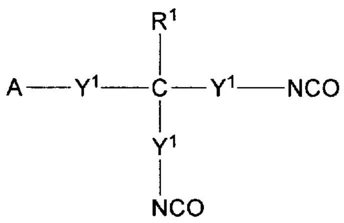
(I) −1

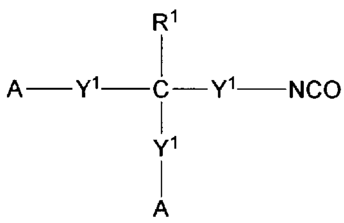
(I) −2

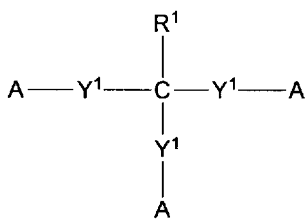
(I) −3

In the general formulae (I)-1, (I)-2, and (I)-3, A, $Y^1$, and $R^1$ represent the same meaning as those of A, $Y^1$, and $R^1$ of the general formula (1) or the general formula (11).

Although the viscosity of the isocyanate composition according to the present embodiment at 25°C is not particularly limited, the viscosity is preferably 5 mPa • s to 1,000 mPa • s, more preferably 10 mPa • s to 500 mPa • s, and even more preferably 10 mPa • s to 250 mPa • s.

In the case where the viscosity is equal to or more than the lower limit, the hardenability tends to be excellent. In the case where the viscosity is equal to or less than the upper limit, the workability tends to be excellent. The viscosity may be measured using an E-type viscometer (manufactured by Tokimec, Inc.).

The average number of NCO groups (average functional group number) per molecule in the isocyanate composition according to the present embodiment is preferably 2.0 to 3.0, more preferably 2.1 to 3.0, even more preferably 2.2 to 3.0, and particularly preferably 2.5 to 3.0 in terms of the drying property and the water-resistance.

[Active hydrogen-containing hydrophilic compound]

Although the active hydrogen-containing hydrophilic compound according to the present embodiment is not particularly limited, the active hydrogen-containing hydrophilic compound is preferably at least one selected from the group consisting of anionic compounds, cationic compounds, and nonionic compounds. It is preferable that the anionic compounds, the cationic compounds, or the nonionic compounds each independently contain an active hydrogen group so as to react an isocyanate group contained in the isocyanate composition therewith. Although the active hydrogen group is not particularly limited, examples thereof include a hydroxyl group, an amino group, a mercapto group, and a carboxylic acid group.

Anionic compound

Although the anionic compound is not particularly limited, at least one selected from the group consisting of carboxylic acid group-containing compounds, phosphoric acid group-containing compounds, and sulfonic acid group-containing compounds is preferable, and at least one selected from phosphoric acid group-containing compounds and

sulfonic acid group-containing compounds is more preferable.

Although the carboxylic acid group-containing compound is not particularly limited, examples thereof include hydroxyl group-containing carboxylic acids such as monohydroxy carboxylic acids, such as 1-hydroxyacetic acid, 3-hydroxypropanoic acid, 12-hydroxy-9-octadecanoic acid, hydroxypivalic acid, and lactic acid; and polyhydroxy carboxylic acids such as dimethylolacetic acid, 2,2-dimethylolbutyric acid, 2,2-dimethylolpentanoic acid, dihydroxysuccinic acid, and dimethylolpropionic acid. Among these, hydroxy pivalic acid and dimethylolpropionic acid are preferable.

Although the phosphoric acid group-containing compound is not particularly limited, examples thereof include acidic phosphoric acid esters, acidic phosphorous acid esters, acidic hypophosphorous acid esters, and particular polyether phosphonates (such as those commercially available from Solvay Nicca, Ltd., under the trade name of "RHODAFAC" (trademark)). Among these, acidic phosphoric acid esters are preferable, and acidic phosphoric acid esters of the following formula (B) are preferable.

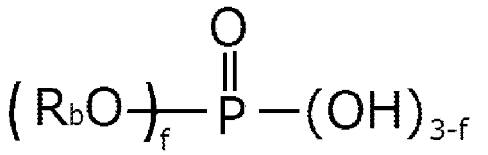

(B)

In the formula, Rb represents a C2-10 (preferably3-8) alkyl group, and f represents 1 or 2.

In terms of the water dispersibility, the phosphorus atom content of the isocyanate composition, relative to the total mass (100% by mass) of the isocyanate composition, is preferably 0.03% by mass or more, more preferably 0.05% by mass or more, and even more preferably 0.1% by mass or more. When the phosphorus atom content is equal to or more than the lower limit, the surface tension is reduced, and higher water dispersibility tends to be exhibited.

In terms of the coating physical properties, the phosphorus atom content of the isocyanate composition is preferably 6.0% by mass or less, more preferably 3.0 mass% or less, and even more preferably 1.0 mass% or less, relative to the total amount (100 mass%) of the isocyanate composition. When the phosphorus atom content is equal to or less than the upper limit, the amount of isocyanate groups to be used in crosslinking is increased, and thereby the coating physical properties tend to be further improved.

Although the method for adjusting the content within the above-mentioned range is not limited to the following method, examples thereof include a method in which a blend ratio of the phosphoric acid group-containing compound and a starting isocyanate composition is adjusted. In addition, the content is measured in accordance with a method described in examples.

The anionic compound is preferably a sulfonic acid group-containing compound. Although the sulfonic acid group-containing compound is not particularly limited, examples thereof include hydroxy group-containing sulfonic acids such as 2-hydroxyethanesulfonic acid, 3-hydroxypropanesulfonic acid, 4-hydroxybutanesulfonic acid, 5-hydroxypentanesulfonic acid, 6-hydroxyhexanesulfonic acid, hydroxybenzenesulfonic acid, hydroxy(methyl)benzenesulfonic acid, 4-(2-hydroxyethyl)-1-piperazineethanesulfonic acid, 4-(2-hydroxyethyl)-1-piperazinepropanesulfonic acid, 2-hydroxy-3-morpholinopropanesulfonic acid, and particular polyether sulfonates such as those commercially available under the trade name "Tegomer" (trademark) (manufactured by The Goldschmidt AG, Essen, Germany). Additional examples include amino group-containing sulfonic acids such as 2-aminoethanesulfonic acid, 2-methylaminoethanesulfonic acid, 2-(cyclohexylamino)-ethanesulfonic acid, 3-(cyclohexylamino)-propanesulfonic acid, 4-aminotoluene-2-sulfonic acid, 5-aminotoluene-2-sulfonic acid, 2-aminonaphthalene-4-sulfonic acid, 4-aminobenzenesulfonic acid, and 3-aminobenzenesulfonic acid.

Among the above compounds, hydroxyl C1-6 alkanesulfonic acids such as 2-hydroxyethanesulfonic acid and 3-hydroxypropanesulfonic acid, hydroxybenzenesulfonic acid, hydroxy(methyl)benzenesulfonic acid, 2-(cyclohexylamino)-ethanesulfonic acid, and 3-(cyclohexylamino)-propanesulfonic acid are preferable, hydroxyl C1-6 alkanesulfonic acids are more preferable, and 2-hydroxy ethanesulfonic acid or 3-hydroxy propanesulfonic acid is even more preferable.

The acid group such as a carboxylic acid group, phosphoric acid group, or sulfonic acid group of the anionic compound is preferably neutralized with an inorganic base or an organic amine compound. Examples of the inorganic base include: alkali metals such as lithium, sodium, potassium, rubidium, and cesium; alkaline-earth metals such as magnesium, calcium, strontium, and barium; metals such as manganese, iron, cobalt, nickel, copper, zinc, silver, cadmium, lead, and aluminum; and ammonia.

Examples of the organic amine compound include: linear tertiary amines such as trimethylamine, triethylamine, tripropylamine, tributylamine, trioctylamine, trilaurylamine, tridecylamine, and tristearylamine; branched tertiary amines such as triisopropylamine, triisobutylamine, tri-2-ethylhexylamine, and tri-branched tridecylamine; tertiary amines having mixed hydrocarbon groups such as N,N-dimethylethylamine, N,N-dimethylpropylamine, N,N-dimethylisopropylamine, N,N-dimethylbutylamine, N,N-dimethylisobutylamine, N,N-dimethyloctylamine, N,N-dimethyl-2-ethylhexylamine, N,N-dimethyllaurylamine, N,N-dimethyl(branched)tridecylamine, N,N-dimethylstearylamine, N,N-diethylbutylamine, N,N-diethylhexylamine, N,N-diethyloctylamine, N,N-diethyl-2-ethylhexylamine, N,N-diethyllaurylamine, N,N-diisopropylmethylamine, N,N-diisopropylethylamine, N,N-diisopropylbutylamine, and N,N-diisopropyl-2-ethylhexylamine; alicyclic tertiary amines such as N,N-dimethylcyclohexylamine, N,N-diethylbenzylamine, N,N-diethylcyclohexylamine, N,N-dicyclohexylmethylamine, N,N-dicyclohexylethylamine, and tricyclohexylamine; tertiary amines having an aromatic ring substituent such as N,N-dimethylbenzylamine, N,N-diethylbenzylamine, N,N-dibenzylmethylamine, tribenzylamine, N,N-dimethyl-4-methylbenzylamine, N,N-dimethylphenylamine, N,N-diethylphenylamine, and N,N-diphenylmethylamine; cyclic amines such as N-methylpyrrolidine, N-ethylpyrrolidine, N-propylpyrrolidine, N-butylpyrrolidine, N-methylpiperidine, N-ethylpiperidine, N-propylpiperidine, N-butylpiperidine, N-methylmorpholine, N-ethylmorpholine, N-propylmorpholine, N-butylmorpholine, N-sec-butylmorpholine, N-tert-butylmorpholine, N-isobutylmorpholine, and quinuclidine; and mixtures of any of these amines.

A preferable compound among the above examples is at least one selected from C5-30 tertiary amines, and specific examples thereof include triethylamine, tripropylamine, tributylamine, trioctylamine, trilaurylamine, tridecylamine, triisopropylamine, triisobutylamine, tri-2-ethylhexylamine, tri-branched tridecylamine, N,N-dimethylpropylamine, N,N-dimethylisopropylamine, N,N-dimethylbutylamine, N,N-dimethylisobutylamine, N,N-dimethyloctylamine, N,N-dimethyl-2-ethylhexylamine, N,N-dimethyllaurylamine, N,N-dimethyl(branched)tridecylamine, N,N-dimethylstearylamine, N,N-diethylbutylamine, N,N-diethylhexylamine, N,N-diethyloctylamine, N,N-diethyl-2-ethylhexylamine, N,N-diethyllaurylamine, N,N-diisopropylmethylamine, N,N-diisopropylethylamine, N,N-dimethylcyclohexylamine, N,N-diethylcyclohexylamine, N,N-dicyclohexylmethylamine, N,N-dicyclohexylethylamine, N,N-dimethylbenzylamine, N,N-diethylbenzylamine, N,N-dibenzylmethylamine, tribenzylamine, N,N-dimethylphenylamine, N,N-diethylphenylamine, N,N-diphenylmethylamine, N-methylpiperidine, N-ethylpiperidine, N-methylmorpholine, N-ethylmorpholine, quinuclidine, pyridine, quinoline, and mixtures of any of these amines. More preferably, tri(C1-6alkyl)amines such as triethylamine, tripropylamine, and tributylamine, N,N-diisopropyl(C1-6alkyl)amines, such as N,N-diisopropylmethylamine, and N,N-diisopropylethylamine, and N,N-(diC1-6alkyl)cyclohexylamine, such as N,N-dimethylcyclohexylamine, and N,N-diethylcyclohexylamine can be mentioned.

Although the polyisocyanate is modified with the hydrophilic compound so as to make the polyisocyanate be dispersed in water, deterioration in the coating physical properties (hardness, solvent resistance, and water resistance) tends to be prevented by controlling the modification degree not to be excessively high. That is, the anionic compound has a high emulsifying capacity and therefore can provide a high emulsifying effect even at a small amount.

In terms of the water dispersibility, the sulfur atom content of the isocyanate composition is preferably 0.03% by mass or more, more preferably 0.05% by mass or more, and even more preferably 0.08% by mass or more, based on the total amount (100% by mass) of the isocyanate composition. When the sulfur atom content is equal to or more than the lower limit, the surface tension is reduced, and thereby higher water dispersibility tends to be exhibited.

In terms of the coating physical properties, the sulfur atom content of the isocyanate composition is preferably 3.0% by mass or less, more preferably 2.5% by mass or less, and even more preferably 2.0% by mass or less, based on the total amount (100% by mass) of the isocyanate composition. When the content is equal to or less than the upper limit, the amount of isocyanate groups to be used in crosslinking is increased, and thereby the coating physical properties tend to be further improved.

Although the method for controlling the content within the above range is not limited to the following method, examples thereof include a method in which the blending ratio between the sulfonic acid group-containing compound and the starting isocyanate composition is adjusted. The content is measured by the method described in Examples.

Although the method for reacting the starting isocyanate composition and the anionic compound is not particularly limited, examples thereof include a method in which the terminal isocyanate group of the isocyanate compound of the starting isocyanate composition and the active hydrogen group of the anionic compoundare reacted.

Cationic compound

Although the cationic compound is not particularly limited, examples thereof include hydroxy group-containing amine compounds such as dimethylethanolamine, diethylethanolamine, diethanolamine, methyldiethanolamine, N,N-dimethylaminohexanol, N,N-dimethylaminoethoxyethanol, N,N-dimethylaminoethoxyethoxyethanol, N,N,N'-trimethylaminoethylethanolamine, and N-methyl-N-(dimethylaminopropyl)aminoethanol. The tertiary amino group (cationic hydrophilic group) modified with the polyisocyanate may be quaternized with dimethyl sulfate or diethyl sulfate. Among the above compounds, dimethylethanolamine, diethylethanolamine, N,N-dimethylaminohexanol, N,N-dimethylaminoethoxyethanol, and N,N-dimethylaminoethoxyethoxyethanol are preferable.

The tertiary amino group of the cationic compound is preferably neutralized with an anionic group-containing compound. Although an anionic group thereof is not particularly limited, examples thereof include a carboxyl group, a sulfonic acid group, a phosphoric acid group, a halogen group, and a sulfuric acid group. Although the carboxyl group-containing compound is not particularly limited, examples thereof include formic acid, acetic acid, propionic acid, butyric acid, and lactic acid. Although the sulfone group-containing compound is not particularly limited, examples thereof include

ethanesulfonic acid. Although the phosphoric acid group-containing compound is not particularly limited, examples thereof include phosphoric acid and acidic phosphoric acid esters. Although the halogen group-containing compound is not particularly limited, examples thereof include hydrochloric acid. Although the sulfuric acid group-containing compound is not particularly limited, examples thereof include sulfuric acid. Among the above compounds, compounds having one carboxyl group are preferable, and acetic acid, propionic acid, and butyric acid are more preferable.

Nonionic compound

Although the nonionic compound is not particularly limited, examples thereof include polyalkylene glycol alkyl ether, and the polyalkylene glycol alkyl ether preferably has a structure of the following general formula (III).

$$HO-\!\left(Y^4-O\right)_y\!-R^2 \qquad (III)$$

In the general formula (III), $Y^4$ represents a C1-4 alkylene group, $R^2$ represents a C1-8 alkyl group, and the average number of repeating unit y of alkylene glycol is 3.0 to 20.

[$Y^4$]

$Y^4$ in the general formula (III) represents a C1-4 alkylene group. Examples of the alkylene group include a methylene group, a dimethylene group, a trimethylene group, and a tetramethylene group. In terms of the impartation of hydrophilicity, a C1-3 alkylene group is preferable. In terms of the impartation of higher hydrophilicity, an ethylene group having two carbon atoms is more preferable.

[R2]

In the general formula (III), $R^2$ represents a C1-8 alkyl group. Examples of the alkyl group include a methyl group, an ethyl group, a propyl group, an isopropyl group, a n-butyl group, an isobutyl group, and a tert-butyl group.

In terms of the impartation of hydrophilicity, a C1-4 alkyl group is preferable. In terms of the impartation of higher hydrophilicity, a methyl group is more preferable.

When a polyisocyanate is mixed with an aqueous primary component, the problem of viscosity increase caused by mixing with the primary component often arises. If the amount of viscosity increase is large, the polyisocyanate tends to fail to be uniformly dispersed in the primary component, and thus the coating physical properties tend to deteriorate.

The average number of repeating unit y of alkylene glycol is preferably 3.0 to 20, more preferably 3.5 to 16, even more preferably 4.0 to 12, and particularly preferably 6.0 to 12, in terms of the water dispersibility and the dispersibility in a primary component. When the average number y is equal to or more than the lower limit, the emulsifying capacity is increased, and thereby the dispersibility tends to be improved. When the average number y is equal to or less than the upper limit, the increase in viscosity is prevented, and thereby dispersing tends to be easy. The polyalkylene glycol alkyl ether used may consist of one kind of components differing in the average number of n or may comprise two or more types of components differing in the average number of n. The average number of n of the polyalkylene glycol alkyl ether used as a starting material is measured by the method described in Examples below.

Although the polyalkylene glycol alkyl ether is not particularly limited, examples thereof include polyethylene glycol (mono)methyl ether, poly(ethylene, propylene) glycol (mono)methyl ether, and polyethylene glycol (mono)ethyl ether. Polyethylene glycol (mono)methyl ether is preferable in terms of impartation of hydrophilicity.

The number of hydroxy groups of the polyalkylene glycol alkyl ether is preferably one in terms of reducing the viscosity of the isocyanate composition.

The isocyanate composition according to the present embodiment preferably contains a moiety derived from the hydrophilic compound (a residual group A in the general formula(I)) in an amount of 0.5% by mass to 50% by mass, based on the total amount (100% by mass) of the isocyanate composition. The lower limit thereof is preferably 2% by mass, and more preferably 3% by mass, in terms of the water dispersibility. The upper limit thereof is more preferably 40% by mass, even more preferably 35% by mass, and particularly preferably 30% by mass, in terms of the drying property and the water-resistance.

When the content of the moiety derived from the hydrophilic compound (preferably, a group of the general formula (iii), derived from the polyalkylene glycol alkyl ether of the general formula (III)) is 0.5% by mass to 50% by mass, the amount of isocyanate groups to be used in crosslinking is increased, and thereby the coating physical properties (external appearance, hardness, surface drying property, and water resistance) and the moisture stability tend to be further improved

Although the method for controlling the content within the range from 0.5% by mass to 50% by mass is not particularly limited, examples thereof include in which the mixing ratio between the polyalkylene glycol alkyl ether and the isocyanate is adjusted. The content is measured by the method described in Examples.

The proportion of the hydrophilic compound modified (the modification degree) in the isocyanate composition refers to the proportion of the active hydrogen groups bound with the hydrophilic compound reacted with isocyanate groups based on 100 equivalents of isocyanate groups of the polyisocyanate which is a starting material.

The modification degree is preferably 0.1% by mol to 50% by mol. The lower limit thereof is more preferably 0.2% by mol, even more preferably 0.3% by mol, and particularly preferably 0.4% by mol in terms of the water dispersibility. The upper limit thereof is more preferably 40% by mol, even more preferably 35% by mol, and particularly preferably 30% by mol, in terms of low viscosity, drying property, and water-resistance.

The modification degree is measured by the method described in Examples.

[Molar ratio of urea group]

A in the general formula (1) has a urea group, and the mole fraction of the urea group derived from isocyanate group, relative to the total mol of the isocyanate group and the urea group the in the general formula (I) (urea group / (isocyanate group + urea group) $\times$ 100) is preferably 0.01% by mol to 10% by mol. The lower limit thereof is more preferably 0.02% by mol, and even more preferably 0.04% by mol in terms of the improvement of the wet-adhesion resistance. The upper limit thereof is more preferably 5% by mol, and even more preferably 2% by mol, in terms of the low viscosity, the water dispersibility, and the water-resistance.

The mole fraction is measured by the method described below.

The isocyanate composition is dissolved in a deuterated chloroform at a concentration of 10% by mass, and the resultant solution is subjected to measurement with $^{13}$C-NMR (manufactured by Bruker, under the trade name of FT-NMR DPX-400). A carbon atom signal of the deuterated chloroform at 77.0 ppm is defined as the chemical shift standard. The signal area of carbon atoms of urea groups in the vicinity of 157.8 ppm and the signal area of carbon atoms of isocyanate groups in the vicinity of 121.5 ppm are measured, and the mole fraction of urea groups derived from isocyanate groups, relative to the total mol of isocyanate groups and urea groups in the isocyanate composition, is calculated based on the resultant areas. In the case where the isocyanate is a blocked isocyanate compound, the mole fraction is calculated by the same way.

[Phosphoric acid compound]

The isocyanate composition according to the present embodiment preferably contains a phosphoric acid compound.

Although the phosphoric acid compound is not particularly limited, examples thereof include acidic phosphoric acid esters, acidic phosphorous acid esters, acidic hypophosphorous acid esters, and particular polyether phosphonates (such as those commercially available from Solvay Nicca, Ltd., under the trade name of "RHODAFAC" (trademark)). Among these, acidic phosphoric acid esters are preferable.

The acid phosphoric acid ester is a compound having both an acid group and an ester group, and examples thereof include C2-8 monoalkyl phosphates, monoalkyl phosphites, and C4-16 dialkyl phosphates, dialkyl phosphites, dilauryl phosphate, diphenyl phosphate, monolauryl phosphate, monophenyl phosphate, dilauryl phosphite, diphenyl phosphite, monolauryl phosphite, and monophenyl phosphite. The acid phosphoric acid ester is preferably a C3-8 monoalkyl phosphate or a C6-16 dialkyl phosphate, and more preferably a C3-8 monoalkyl phosphate such as monobutyl phosphate. One kind of the acid phosphoric acid ester may be added alone, or at least two kinds thereof may be added in combination, or sequentially.

The lower limit of the content of phosphorus atoms of the phosphoric acid compound, based on the total amount of the isocyanate composition (100% by mass), is preferably 0.0001% by mass or more, more preferably 0.0002% by mass or more, and even more preferably 0.0005% by mass or more, in terms of the water dispersibility.

The upper limit of the content of phosphorus atoms of the phosphoric acid compound, based on the total amount of the isocyanate composition (100% by mass), is preferably 1.0% by mass or less, more preferably 0.5% by mass or less, and even more preferably 0.2% by mass or less, in terms of the external appearance of a resultant coating film.

Although the phosphoric acid compound may be added before, during, or after the reaction of the triisocyanate compound and the polyalkylene glycol alkyl ether, for example, the phosphoric acid compound is preferably added before the reaction in terms of the improvement of the water dispersibility. The content may be determined by the ways described in examples.

<Production method of aqueous polyisocyanate dispersion>

Although the method for reacting the triisocyanate and the hydrophilic compound is not particularly limited, examples thereof include a method in which an isocyanate group of the triisocyanate and an active hydrogen group of the hydrophilic compound are reacted, as described below.

Although the reaction temperature and the reaction time may be appropriately determined depending on the reaction progress at the reaction step, the reaction temperature is preferably 0°C to 150°C, and the reaction time is preferably 0.5 hours to 48 hours.

A conventionally-known catalyst may be used in accordance with circumstances at the reaction step. Specific examples of the catalyst include: organic tin compounds such as tin octanoate, tin 2-ethyl-1-hexanoate, tin ethylcaproate, tin laurate, tin palmitate, dibutyltin oxide, dibutyltin dichloride, dibutyltin diacetate, dibutyltin dimalate, dibutyltin dilaurate, dioctyltin diacetate, and dioctyltin dilaurate; zinc chloride, organic zinc compounds such as zinc octanoate, zinc 2-ethyl-1-hexanoate, zinc 2-ethylcaproate, zinc stearate, zinc naphthenate, and zinc acetylacetonate; organic titanium compounds; organic zirconium compounds; tertiary amines such as triethylamine, tributylamine, N,N-diisopropylethylamine, and N,N-dimethylethanolamine; and diamines such as triethylenediamine, tetramethylethylenediamine, and 1,4-diazabicyclo[2.2.2]octane. One of these or a mixture of two or more of these may be used. Among these, organic tin compounds such as dibutyltin dilaurate are preferable.

In addition, it is preferable that the reaction be allowed to proceed while maintaining water such that the mole fraction of urea groups derived from isocyanate groups in the general formula (I) in the isocyanate composition (urea groups / (isocyanate groups + urea groups) $\times$ 100) is 0.01% by mol to 10% by mol. Water may be added by adding a starting hydrophilic compound containing water as a raw material, adding water before the reaction of the triisocyanate and the hydrophilic compound, or adding water after the reaction of the triisocyanate and the hydrophilic compound, followed by conducting heating and stirring. The amount of water, relative to the total amount of the triisocyanate and the hydrophilic compound, is preferably 10 ppm to 5000 ppm. The lower limit thereof is more preferably 30 ppm, and even more preferably 50 ppm, in terms that the wet-adhesion resistance becomes excellent. The upper limit thereof is more preferably 3000 ppm, and even more preferably 1000 ppm, in terms of the drying property and the water-resistance.

In the production method of the isocyanate composition according to the present embodiment, a solvent may be used or may not be used. As the solvent available in the production method of the isocyanate composition according to the present embodiment may be a hydrophilic solvent or a hydrophobic solvent.

Examples of the hydrophobic solvent include: mineral spirit, solvent naphtha, LAWS (Low Aromatic White Spirit), HAWS (High Aromatic White Spirit), toluene, xylene, cyclohexane; esters such as ethyl acetate and butyl acetate, and ketones such as acetone, methyl ethyl ketone, methyl isobutyl ketone and cyclohexanone. Among these, ketones such as acetone are preferable.

Examples of the hydrophilic solvent include alcohols such as methanol, ethanol, propanol, butanol, isopropanol and 2-ethylhexanol; ethers such as diethylene glycol dimethyl ether, diethylene glycol diethyl ether, diethylene glycol dibutyl ether, and dipropylene glycol dimethyl ether; and esters of ether alcohols, such as ethylene glycol monomethyl ether acetate, ethylene glycol monoethyl ether acetate, ethylene glycol monobutyl ether acetate, diethylene glycol monoethyl ether acetate, diethylene glycol monobutyl ether acetate, propylene glycol monoethyl ether acetate, propylene glycol monomethyl ether acetate, and dipropylene glycol monomethyl ether acetate. These may be used solely or used as a mixture thereof. Among these, C1-8 alcohols such as 2-ethylhexanol and diC1-4alkylene glycol diC1-3alkyl ether such as dipropylene glycol dimethyl ether are preferable.

In the production method of the isocyanate composition according to the present embodiment, at least one selected from the group consisting of antioxidants, light stabilizers, polymerization inhibitors and surfactants may be added in addition to the hydrophilic compound and the triisocyanate.

<Additional isocyanate compound>

The isocyanate composition according to the present embodiment may be mixed with an isocyanate compound different from the above-mentioned isocyanate compound.

Examples of the additional isocyanate compound include di- or poly-isocyanates having aliphatic, alicyclic, or aromatic isocyanate groups. Examples of the diisocyanate include tetramethylene diisocyanate (TMDI), pentamethylene diisocyanate (PDI), hexamethylene diisocyanate (HDI), 2,2,4-trimethylhexane-1,6-diisocyanate, 2-methylpentane-1,5-diisocyanate (MPD1), 1,3-bis(isocyanatomethyl)-cyclohexane (1,3-H6-XDI), 3(4)-isocyanatomethyl-1-methylcyclohexyl isocyanate (1MC1); isophorone diisocyanate (IPDI), bis(isocyanatomethyl)-norbornane (NBDI), 1,3-bis(isocyanatomethyl)-benzene, 1,3-bis(2-isocyanatopropyl-2)benzene, 4,4'-dicyclohexylmethane diisocyanate (H12MD1), and lysine diisocyanate (LDI). Among these, HDI and IPDI are preferable in terms of the weather resistance and the easiness in industrial availability. One kind of these diisocyanates may be used alone or at least two kinds thereof may be used in combination.

The polyisocyanate is obtained by polymerizing diisocyanates by using a catalyst or conducting heating, and contains in a molecule thereof an isocyanurate structure, an uretdione structure, an allophanate structure, an iminooxadiazinedione structure, a urethane structure, or a biuret structure. Among these, a polyisocyanate having an isocyanurate structure is preferable in terms of the weather resistance. The polyisocyanate may be a hydrophilic polyisocyanate obtained by reacting a compound containing an active hydrogen group and a hydrophilic group (hydrophilic group-containing compound) with an isocyanate group, followed by adding a hydrophilic group thereto.

The mass ratio of the isocyanate compound and the polyisocyanate, isocyanate compound/polyisocyanate, is preferably 5/95 to 100/0, in terms of the low viscosity, the water dispersibility, and the water-resistance. In addition, the ratio is more preferably 10/90 to 100/0, and even more preferably 20/80 to 100/0.

<Blocked isocyanate composition>

The isocyanate composition according to the present embodiment may be a blocked isocyanate composition obtained by protecting at least a part of the isocyanate groups of the isocyanate compound of general formula (1) with a blocking agent. Examples of the blocking agent include alcohol-based compounds, alkylphenol-based compounds, phenol-based compounds, active methylene-based compounds, mercaptan-based compounds, acid amide-based compounds, acid imide-based compound, imidazole-based compounds, urea-based compounds, oxime-based compounds, amine-based compounds, imide-based compounds, and pyrazole-based compounds. Specific examples of the blocking agent include the following.

(1) Alcohol-based compounds: such as methanol, ethanol, 2-propanol, n-butanol, sec-butanol, 2-ethyl-1-hexanol, 2-methoxyethanol, 2-ethoxyethanol, and 2-butoxyethanol; (2) alkylphenol-based compounds: mono- or di-alkylphenols having an alkyl group having at least 4 carbon atoms as a substituent, such as monoalkylphenols such as n-propylphenol, iso-propylphenol, n-butylphenol, sec-butylphenol, t-butylphenol, n-hexylphenol, 2-ethylhexylphenol, n-octylphenol, and n-nonylphenol; and dialkylphenols such as di-n-propylphenol, diisopropylphenol, isopropylcresol, di-n-butylphenol, di-t-butylphenol, di-sec-butylphenol, di-n-octylphenol, di-2-ethylhexylphenol, and di-n-nonylphenol; (3) phenol-based compounds: such as phenol, cresol, ethylphenol, styrenated phenol, and hydroxybenzoate; (4) active methylene-based compounds: such as dimethyl malonate, diethyl malonate, methyl acetoacetate, ethyl acetoacetate, and acetylacetone; (5) mercaptan-based compounds: such as butyl mercaptan, and dodecyl mercaptan; (6) acid amide-based compounds: such as acetanilide, acetamide, ε-caprolactam, δ-valerolactam, and γ-butyrolactam; (7) acid imide-based compounds: such as succinimide and maleinimide; (8) imidazole-based compounds: such as imidazole and 2-methylimidazole; (9) urea-based compounds:such as urea, thiourea and ethylene urea; (10) oxime-based compounds: such as formaldoxime, acetaldoxime, acetoxime, methylethylketoxime, and cyclohexanone oxime; (11) amine-based compounds: such as diphenylamine, aniline, carbazole, di-n-propylamine, diisopropylamine, and isopropylethylamine; (12) imine-based compounds: such as ethylene imine and polyethylene imine; (13) hydrogen sulfites; such assodium hydrogen sulfite; (14) pyrazole-based compounds: such as pyrazole, 3-methylpyrazole, and 3,5-dimethylpyrazole; and (15) triazole-based compounds; such as 3,5-dimethyl-1,2,4-triazole-based compounds.

The blocking reaction of the isocyanate composition and the blocking agent may be conducted in spite of the presence or absence of a solvent. In the case where a solvent is used, a solvent inert to an isocyanate group is required to be used. In the blocking reaction, an organic salt of metal such as tin, zinc, or lead, a tertiary amine-based compound, or an alcoholate of alkali metal such as sodium may be used as a catalyst. Although the reaction may be conducted generally at -20°C to 150°C, the reaction is preferably conducted at 30°C to 100°C. In the case of -20°C or more, the reaction speed tends to be rapid, whilst in the case of 150°C or less, the side-reaction tends to be inhibited.

Among the above-mentioned blocking agents, in terms of easy availability and the viscosity of the resultant blocked isocyanate composition, reaction temperature, and the reaction time, at least one selected from the group consisting of oxime-based compounds, acid amide-based compounds, amine-based compounds, active methylene-based compounds, and pyrazole-based compounds is preferably contained, methylethylketoxime, ε-caprolactam, diethyl malonate, ethyl acetoacetate, diisopropylamine, and 3,5-dimethylpyrazole are more preferable, methylethylketoxime, diisopropylamine, and 3,5-dimethylpyrazole are even more preferable, and 3,5-dimethylpyrazole is particularly preferable in terms that both the hardenability at low temperature and the compatibility with polyol are realized. One kind of the thermally dissociative blocking agent may be used alone, or at least two kinds thereof may be used in combination.

In the blocked isocyanate compound in which at least a part of the isocyanate groups of the isocyanate compound of the general formula (1) is protected, the protected group preferably has a structure of the following formula.

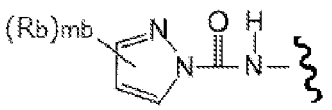
(B)

In the formula (B), Rb represents a C1-3 alkyl group, mb represent 1 or 2, and a wavy line represents a bond.
Although the viscosity of the blocked isocyanate composition according to the present embodiment at 25°C is not particularly limited, the viscosity is preferably 10 mPa • s to 1,000 mPa • s, more preferably 55 mPa • s to 1,000 mPa • s, and particularly preferably 60 mPa • s to 800 mPa • s.
In the case where the viscosity is equal to or more than the lower limit, the hardenability tends to become excellent. In the case where the viscosity is equal to or less than the upper limit, the workability tends to become excellent. The viscosity may be measured using an E-type viscometer (manufactured by Tokimec, Inc.).

<Additional compound>

The isocyanate composition according to the present embodiment may contain at least one compound selected from the group consisting of unsaturated bond-containing compounds, inert compounds, metal atoms, basic amino compounds, and carbon dioxide, in an amount of 1.0 ppm by mass to $1.0\times10^4$ ppm by mass, relative to the isocyanate compound of general formula (I), from the viewpoint of coloring suppresibility and stability improvement when stored for a long term. The amount may be 3.0 ppm by mass or more, 5.0 ppm by mass or more, or 10 ppm by mass or more, and $5.0\times10^3$ ppm by mass or less, $3.0\times10^3$ ppm by mass or less, or $1.0\times10^3$ ppm by mass or less.
The unsaturated bond-containing compound according to the present embodiment preferably has an unsaturated bond between carbon atoms, between a carbon atom and a nitrogen atom, or between a carbon atom and an oxygen atom. From the viewpoint of the stability of the compound, it is preferable that the unsaturated bond be a double bond, and more preferably a double bond between carbon atoms (C=C) or a double bond between a carbon atom and an oxygen atom (C=O). In addition, it is preferable that carbon atoms constituting the compound bond to at least three atoms.
Although there is a general case where the double bond between carbon atoms is a double bond between carbon atoms constituting an aromatic ring, the unsaturated bond contained in the unsaturated bond-containing compound in the present embodiment does not contain any double bonds between carbon atoms constituting an aromatic ring.
Examples of the compound having a double bond between a carbon atom and an oxygen atom include: carbonic acid derivatives. Examples of the carbonic acid derivative include urea compounds, carbonate esters, N-unsubstituted carbamic ester, and N-substituted carbamic esters, and N-substituted carbamic esters are preferable.
The inert compounds in the present embodiment are classified into the following compound A to compound G.
Hydrocarbon compounds are classified into the compound A and the compound B, ether compounds and sulfide compounds are classified into the compounds C to E, halogenated hydrocarbon compounds are classified into the compound F, and silicon-containing hydrocarbon compounds, silicon-containing ether compounds and silicon-containing sulfide compounds are classified into the compound G. The compound A to compound G does not contain any unsaturated bonds other than aromatic rings, and the above-mentioned unsaturated bond-containing compound does not belong thereto.
Compound A: aliphatic hydrocarbon compound having a linear, branched or cyclic structure (preferably, C5-20 alkanes having a linear or branched structure, such as 2,2,4-trimethylpentane or hexadecane).
Compound B: aromatic hydrocarbon compound which may be substituted with an aliphatic hydrocarbon group.
Compound C: compound having either an ether bond or a sulfide bond and aliphatic hydrocarbon groups, in which the same kind or different kind of aliphatic hydrocarbon compounds are bonded together through the ether bond or the sulfide bond.
Compound D: compound having either an ether bond or a sulfide bond and aromatic hydrocarbon groups, in which the same kind or different kind of aromatic hydrocarbon groups are bonded together through the ether bond or the sulfide bond.
Compound E: compound having either an ether bond or a sulfide bond, aliphatic hydrocarbon group and an aromatic hydrocarbon group.
Compound F: halide in which at least one hydrogen atom constituting an aliphatic hydrocarbon compound, or at least one hydrogen atom constituting an aromatic hydrocarbon compound is substituted with a halogen atom.
Compound G: compound in which a part or a whole of carbon atoms of the compound A to compound E is substituted with silicon atoms.
The metal atom may be present as a metal ion, or as a metal atom alone. The metal atom may be one kind of metal atom or in combination of a plurality of kinds of metal atoms. The metal atom is preferably a divalent to tetravalent metal atom, and, among these, at least one metal selected from the group consisting of iron, cobalt, nickel, zinc, tin, copper, and titanium is more preferable.
The basic amino compound is an ammonia derivative such as a compound (primary) in which one hydrogen atom is substituted with an alkyl group or an aryl group; a compound (secondary) in which two hydrogen atoms are substituted therewith; and a compound (tertiary) in which three hydrogen atoms are substituted therewith. The basic amino compound preferably available according to the present invention is a secondary or tertiary amino compound,

and an aliphatic amine, an aromatic amine, a heterocyclic amine, or a basic amino acid is preferably available.

The carbon dioxide may be dissolved in isocyanate under an ordinary pressure or under pressure in a pressure vessel. The moisture amount in the carbon dioxide is preferably controlled, as needed, because there is a case where carbon dioxide containing moisture causes hydrolysis of isocyanate.

The amount of halogen atoms in the isocyanate composition according to the present embodiment is preferably $1.0 \times 10^2$ ppm by mass or less from the viewpoint of prevention of coloring. Although the halogen atom is not particularly limited, the halogen atom is preferably chlorine and/or bromine, and more preferably at least one ion and/or compound selected from the group consisting of chlorine ion, bromine ion, hydrolyzable chlorine and hydrolyzable bromine. Examples of the hydrolyzable chlorine include a carbamoyl chloride compound in which a hydrogen chloride is added to an isocyanate group, and examples of the hydrolyzable bromine include a carbamoyl bromide compound in which a hydrogen bromide is added to an isocyanate group.

<Coating composition>

The coating composition according to the present embodiment contains the above-mentioned isocyanate composition. The coating composition is not particularly limited, may be an organic solvent-based coating composition or a water-based coating composition in which resins as coating film forming components are dissolved or dispersed in a medium primary containing water, and is preferably the water-based coating composition in terms that the use amount of an organic solvent can be reduced. The coating composition may be used, for example, as an architectural coating material, automotive coating material, automotive refinishing coating material, coating material to be applied on plastics, tackifier, adhesive, building material, household water-based coating material, other coating material, sealing agent, ink, casting material, elastomer, foam, plastic raw material, or fiber treatment agent.

Although the resins which are the primary components of the water-based coating composition are not particularly limited, examples thereof include acrylic resins, polyester resins, polyether resins, epoxy resins, fluorine resins, polyurethane resins, polyvinylidene chloride copolymers, polyvinyl chloride copolymers, vinyl acetate copolymers, acrylonitrile-butadiene copolymers, polybutadiene copolymers, and styrene-butadiene copolymers.

Although the acrylic resins are not particularly limited, examples thereof include: (meth)acrylic esters, such as methyl (meth)acrylate, ethyl (meth)acrylate, isopropyl (meth)acrylate, n-butyl (meth)acrylate, 2-ethylhexyl (meth)acrylate, and lauryl (meth)acrylate; (meth)acrylic esters having an active hydrogen, such as 2-hydroxyethyl (meth)acrylate, 2-hydroxypropy (meth)acrylate, 2-hydroxybutyl (meth)acrylate, 3-hydroxypropyl (meth)acrylate, and 4-hydroxybutyl (meth)acrylate; unsaturated carboxylic acids, such as acrylic acid, methacrylic acid, maleic acid, and itaconic acid; unsaturated amides such as acrylamide, N-methylol acrylamide, and diacetone acrylamide; and acrylic resins obtained by polymerizing one or a mixture of other polymerizable monomers, such as glycidyl methacrylate, styrene, vinyl toluene, vinyl acetate, acrylonitrile, dibutyl fumarate, p-styrenesulfonic acid, or allyl sulfosuccinic acid. Although an emulsion polymerization method is generally adopted as a polymerization method thereof, a suspension polymerization method, a dispersion polymerization method, or a solution polymerization method may be adopted. In the emulsion polymerization, polymerization may be conducted in a stepwise manner.

Although the polyester resins are not particularly limited, examples thereof include: polyester resins obtained by condensation reaction of one or a mixture of carboxylic acids, such as succinic acid, adipic acid, sebacic acid, dimer acid, maleic anhydride, phthalic anhydride, isophthalic acid, terephthalic acid, trimellitic acid, or pyromellitic acid, with one or a mixture of polyhydric alcohols selected from the group consisting of: diols, such as ethylene glycol, diethylene glycol, triethylene glycol, propylene glycol, dipropylene glycol, tripropylene glycol, 1,2-propanediol, 1,3-propanediol, 1,2-butanediol, 1,3-butanediol, 1,4-butanediol, 2,3-butanediol, 2-methyl-1,2-propanediol, 1,5-pentanediol, 2-methyl-2,3-butanediol, 1,6-hexanediol, 1,2-hexanediol, 2,5-hexanediol, 2-methyl-2,4-pentanediol, 2,3-dimethyl-2,3-butanediol, 2-ethyl-hexanediol, 1,2-octanediol, 1,2-decanediol, 2,2,4-trimethylpentanediol, 2-butyl-2-ethyl-1,3-propanediol, and 2,2-diethyl-1,3-propanediol; triols, such as glycerin and trimethylolpropane; and tetraols, such as diglycerin, dimethylolpropane and pentaerythritol; and polycaprolactones obtained by ring-opening polymerization of ε-caprolactone with a hydroxyl group of a polyol having a low molecular weight. Among these, C2-10 alkanediols, such as 2,2,4-trimethylpentanediol, are preferable.

Although the polyether resins are not particularly limited, examples thereof include: polyether polyols obtained by adding one or a mixture of alkylene oxides, such as ethylene oxide, propylene oxide, butylene oxide, cyclohexene oxide, and styrene oxide, to one or a mixture of polyvalent hydroxy compounds using a hydroxide of lithium, sodium, potassium, or the like, or a strong basic catalyst such an alcoholate or an alkylamine; polyether polyols obtained by reacting an alkylene oxide with a polyfunctional compound such as ethylenediamine; polyether polyols obtained by ring-opening polymerization of cyclic ethers such as tetrahydrofuran; and polymer polyols obtained by polymerization of acrylamides using these polyethers as a medium.

Among these resins, acrylic resins or polyester resins are preferable. In addition, a melamine-based curing agent, or a resin such as urethane dispersion or urethane acrylic emulsion may be used together, as needed.

It is preferable that these resins be emulsified, dispersed or dissolved in water, and therefore carboxyl groups, sulfone groups, or the like, contained in the resins, may be neutralized.

As a neutralizing agent available to neutralize the carboxyl groups, the sulfone groups, or the like, at least one selected from the groups consisting of ammonia and water-soluble amino compounds such as monoethanolamine, ethylamine, dimethylamine, diethylamine, triethylamine, propylamine, dipropylamine, isopropylamine, diisopropylamine, triethanolamine, butylamine, dibutylamine, 2-ethylhexylamine, ethylenediamine, propylenediamine, methylethanolamine, dimethylethanolamine, diethylethanolamine, and morpholine, may be used. As the neutralizing agent, the triethylamine and dimethylethanolamine, that are tertiary amines, are preferable.

Furthermore, there may be incorporated an additive which is commonly added to a coating material, such as an inorganic pigment, organic pigment, extender pigment, silane coupling agent, titanium coupling agent, organic phosphoric acid salt, organic phosphorous acid salt, thickener, leveling agent, thixotropy imparting agent, anti-foaming agent, anti-freezing agent, delusterant, crosslinking catalyst, anti-sticking agent, dispersant, wetting agent, filler, plasticizer, lubricant, reductant, preservative, anti-fungal agent, deodorant, anti-yellowing agent, ultraviolet absorber, anti-static agent, electrostatic modifier, or anti-setting agent. To improve dispersibility in a coating material, a surfactant may be further added. To improve the storage stability of a coating material, an antioxidant, light stabilizer, or polymerization inhibitor may be further added.

Although the curing accelerating catalyst is not particularly limited, examples thereof include: metal salts such as dibutyltin dilaurate, tin 2-ethylhexanoate, zinc 2-ethylhexanoate, and cobalt salts; and tertiary amines such as triethylamine, pyridine, methylpyridine, benzyldimethylamine, N, N-dimethylcyclohexylamine, N-methylpiperidine, pentamethyl diethylene triamine, and N,N'-endethylene piperazine, N,N'-dimethyl piperazine.

<Aqueous dispersion> (according to the invention)

An aqueous dispersion according to the second embodiment, which is according to the present invention, contains: water and an isocyanate composition dispersed in water. The isocyanate composition contained in the aqueous dispersion according to the present embodiment, which is according to the invention, will be explained. Hereinafter, the same constitutions as those of the first embodiment may be omitted.

<<Isocyanate composition>>

An isocyanate composition available in the present embodiment contains at least one selected from the group consisting of triisocyanate compounds of the general formula (IV) and diisocyanate compounds of the general formula (V). The volume-average dispersion particle diameter is 200 nm to 8000 nm, and particularly preferably 200 nm to 6000 nm, in terms that both the water-dispersion stability and the water-resistance of a coating film are realized.

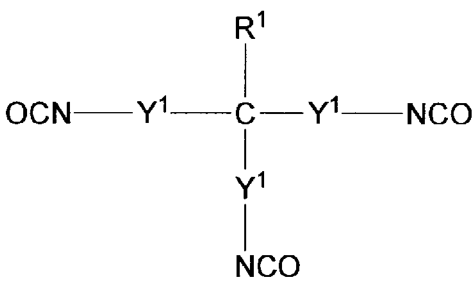

(IV)

In the general formula (IV), $Y^1$ and $R^1$ represent the same meaning as $Y^1$ and $R^1$ of the first embodiment.

$OCN\text{-}Y^2\text{-}NCO$ (V)

In the general formula (V), $Y^2$ represents a divalent C1-20 hydrocarbon group having an ester structure.

The diisocyanate of the general formula (V) has an ester structure to enhance the reactivity of the isocyanate group when used as a curing agent of a coating composition, and maintain the heat resistance.

In addition, a hydrocarbon group in $Y^2$ preferably has an aliphatic group or an aromatic group so as to decrease the viscosity.

Examples of the diisocyanate classified thereinto include lysine diisocyanate (LDI).

(Production method of triisocyanate or diisocyanate)

Triisocyanate of the general formula (IV) or the diisocyanate of the general formula (V) according to the present embodiment may be obtained by forming an isocyanate from an amine of an amino acid derivative. Examples of the amino acid derivative include 2,5-diaminovaleric acid, 2,6-diaminohexanoic acid, asparaginic acid, and glutamic acid. These amino acids are diamine monocarboxylates or monoamine dicarboxylates, and therefore the number of amino groups may be controlled by esterifying carboxyl groups with an alkanol amine such as ethanol amine, or esterifying carboxyl groups with methanol, for example. The resultant amine having an ester grous may be made to be a triisocyanate or a diisocyanate having an ester structure by conducting phosgenation.

Examples of an alkyl triamine include triisocyanatononane (4-aminomethyl-1,8-octanediamine). The alkyl amine is a triamine, and can be made to be a triisocyanate having only hydrocarbon by phosgenation of the amine.

The content of the triisocyanate compound, relative to the total mass of the isocyanate composition used in the present embodiment, is preferably, 1% by mass to 100% by mass, more preferably 2% by mass to 90% by mass, and even more preferably 5% by mass to 80% by mass, in terms that both the water-dispersibility and the drying property are realized.

Although the viscosity at 25°C of the isocyanate composition used in the present embodiment is not particularly limited, the viscosity is preferably 2 mPa • s to 2000 mPa • s. The lower limit thereof is more preferably 5 mPa • s, and particularly preferably 7 mPa • s, in terms of the hardenability. The upper limit thereof is more preferably 1800 mPa • s, even more preferably 1600 mPa • s, even more preferably 250 mPa • s, and even more preferably 100 mPa • s, in terms of the workability. The viscosity may be measured using an E-type viscometer (manufactured by Tokimec, Inc.).

The isocyanate composition available in the present embodiment may be added to water to be stably dispersed therein.

The volume-average dispersion particle diameter of the aqueous dispersion of the isocyanate composition according to the present embodiment is 200 nm to 8000 nm, and particularly preferably 200 nm to 6000 nm, in terms that both the water-dispersion stability and the water-resistance of a coating film are realized.

The isocyanate composition according to the present embodiment may be made to be a hydrophilic isocyanate composition by reacting a part of isocyanate groups of the triisocyanate compound of the general formula (IV) and/or a diisocyanate compound of the general formula (V) with a compound having an active hydrogen group and a hydrophilic group (hydrophilic group-containing compound) to add the hydrophilic group thereto.

Although the hydrophilic group-containing compound is not particularly limited, examples thereof include the nonionic compounds, the cationic compounds and the anionic compounds, and the active hydrogen-containing hydrophilic compound of the first embodiment is an exemplary example.

Although a compound used to introduce a nonionic hydrophilic group is not particularly limited, examples thereof include compounds in which an ethylene oxide is added to a hydroxyl group of an alcohol such as methanol, ethanol, butanol, ethylene glycol, or diethylene glycol. These compounds have an active hydrogen that reacts with an isocyanate group. Among these, a monoalcohol that can improve the water dispersibility of a hydrophilic isocyanate composition at a small amount thereof is preferable. The number of added ethylene oxide is preferably 4 to 30 and more preferably 4 to 20. In the case where the number of added ethylene oxide is equal to or more than the lower limit, there is a tendency for the hydrophilization to be easily ensured. In the case where the number of added ethylene oxide is the upper limit of less, there is a tendency for the generation of deposits of the hydrophilic isocyanate composition to be suppressed when stored at a low temperature.

Examples of a method for conducting introduction of a cationic hydrophilic group include a method in which a compound having a cationic group and a functional group having an active hydrogen having a reactivity with an isocyanate group is used, and a method in which a functional group such as a glycidyl group is added to an isocyanate group, followed by reacting the functional group with a specific compound such as sulfide or phosphine. Among these, the method in which a compound having a cationic group and an active hydrogen group having a reactivity with an isocyanate group is used is easily conducted.

Although a functional group having an active hydrogen group having a reactivity with an isocyanate group is not particularly limited, examples thereof include a hydroxyl group and a thio group. Although the compound having both a cationic hydrophilic group and a functional group having an active hydrogen group is not particularly limited, examples thereof include dimethylethanolamine, diethylethanolamine, diethanolamine, methyldiethanolamine, N, N-dimethylaminohexanol, N, N-dimethylaminoethoxyethanol, N, N-dimethylaminoethoxyethoxyethanol, N, N, N'-trimethylaminoethylethanolamine, and N-methyl-N-(dimethylaminopropyl)aminoethanol. In addition, a tertiary amino group (cationic hydrophilic group) introduced into an aqueous blocked polyisocyanate may be quaternized with dimethyl sulfate, diethyl sulfate, or the like.

Among these, the cationic hydrophilic group is preferably a tertiary amino group. In the case where the hydrophilic isocyanate composition contain a tertiary amino group, a compound used to conduct neutralization, such as an anionic compound mentioned below, is easily vaporized by conducting heating, and thereby the water-resistance tends to be

further improved.

The introduction of the cationic hydrophilic group may be conducted in the presence of a solvent. In the case, the solvent is preferably free from any functional groups having a reactivity with an isocyanate group. Although the solvent is not particularly limited, examples thereof include ethyl acetate, propylene glycol monomethyl ether acetate, and dipropylene glycol dimethyl ether.

The cationic hydrophilic group introduced into the hydrophilic isocyanate composition is preferably neutralized with an anionic group-containing compound. Although an anionic group thereof is not particularly limited, examples thereof include a carboxyl group, a sulfonic acid group, a phosphoric acid group, a halogen group, and a sulfuric acid. Although the compound having a carboxyl group is not particularly limited, examples thereof include formic acid, acetic acid, propionic acid, butyric acid, and lactic acid. Although the compound having a sulfonic acid group is not particularly limited, examples thereof include ethane sulfonate. Although the compound having a phosphoric acid group is not particularly limited, examples thereof include phosphoric acid, and acidic phosphoric acid ester. Although the compound having a halogen group is not particularly limited, examples thereof include hydrochloric acid. Although the compound having a sulfuric acid group is not particularly limited, examples thereof include sulfuric acid. Among these, a compound having one carboxyl group is preferable, and acetic acid, propionic acid, or butyric acid is more preferable.

Although the anionic hydrophilic group is not particularly limited, examples thereof include a carboxylic acid group, a sulfonic acid group, a phosphoric acid group, a halogen group, and a sulfuric acid group. A blocked polyisocyanate having an anionic hydrophilic group may be obtained, for example, by reacting an active hydrogen of a compound having both the active hydrogen that reacts with an isocyanate group and an anionic group with an isocyanate group of a precursor isocyanate composition.

Although the compound having both an active hydrogen and a carboxylic acid group is not particularly limited, examples thereof include: monohydroxy carboxylic acids such as 1-hydroxyacetic acid, 3-hydroxypropanoic acid, 12-hydroxy-9-octadecanoic acid, hydroxypivalic acid, and lactic acid; and polyhydroxy carboxylic acids such as dimethylol acetic acid, 2,2-dimethylol butyric acid, 2,2-dimethylol pentanoic acid, dihydroxy succinic acid, and dimethylol propionic acid. Among these, hydroxypivalic acid and dimethylol propionic acid are preferable.

Although the compound having both an active hydrogen and a sulfonic acid group is not particularly limited, examples thereof include isethionic acid.

The anionic hydrophilic group introduced into the hydrophilic isocyanate composition may be neutralized with an amine-based compound, which is a basic substance, without particular limitations. Although the amine-based compound is not particularly limited, examples thereof include ammonia and water-soluble amino compounds. Although the water-soluble amino compound is not particularly limited, examples thereof include: primary amines and secondary amines, such as monoethanolamine, ethylamine, dimethylamine, diethylamine, triethylamine, propylamine, dipropylamine, isopropylamine, diisopropylamine, triethanolamine, butylamine, dibutylamine, 2-ethylhexylamine, ethylene diamine, propylene diamine, methylethanolamine, dimethylethanolamine, diethylethanolamine, and morpholine; and tertiary amines such as triethylamine and dimethylethanolamine.

In the isocyanate composition according to the present embodiment, the content of hydrophilic groups derived from the hydrophilic group-containing compound, relative to the total amount (100% by mass) of the isocyanate composition, is preferably 5% by mass or less, and more preferably 0% by mass to 5% by mass. The upper limit thereof is more preferably 4% by mass, more preferably 3% by mass, even more preferably 2% by mass, and particularly preferably 1% by mass, in terms of the drying property and the water-resistance.

Although the method for adjusting the content within the range of 0% by mass to 5% by mass is not limited to the following method, examples thereof include a method in which the mixing ratio of the hydrophilic group-containing compound and the polyisocyanate is adjusted. The content may be measured by the method described in examples.

The isocyanate composition according to the present embodiment may further contain a polyisocyanate compound having an allophanate structure of general formula (VI) described below.

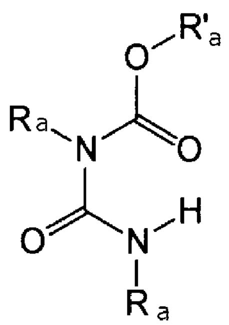

(VI)

In the general formula (VI), Ra represents an organic group. At least one of a plurality of Ra is a group of general formula (VII). The plurality of Ra may be identical to or different from each other. R'a represents a residual group obtained by removing one hydroxyl group from a monovalent or more-valent alcohol.

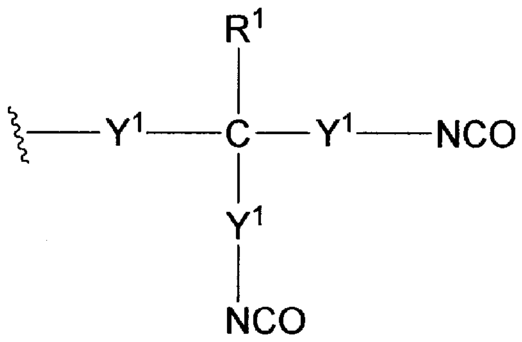

(VII)

In the general formula (VII), $Y^1$, $R^1$, and the wavy line represent the same meaning as that of the first embodiment.

[Ra]

In the general formula (VI), Ra represents an organic group. At least one of a plurality of Ra represents a group of general formula (VII). The plurality of Ra may be identical to or different from each other.

According to the present embodiment, at least one of two Ra is a group of general formula (VII), and more preferably two Ra are groups of general formula (VII).

Examples of a group of Ra other than the group of general formula (VII) include residual groups obtained by removing an isocyanate group from tetramethylene diisocyanate (TMDI), pentamethylene diisocyanate (PDI), hexamethylene diisocyanate (HDI), 2, 2, 4-trimethylhexane-1, 6-diisocyanate, 2-methylpentane-1, 5-diisocyanate (MPDI), 1, 3-bis(isocyanatomethyl)-cyclohexane(1, 3-H6-XDI), 3(4)-isocyanatomethyl-1-methyl-cyclohexyl isocyanate (IMCI); isophorone diisocyanate (IPD1), bis(isocyanatomethyl)-norbornane (NBD1), 1, 3-bis(isocyanatomethyl)-benzene, 1, 3-bis(2-isocyanatopropyl-2)benzene or 4, 4'-dicyclohexylmethane diisocyanate (H12MDI).

General formula (VII)

[$Y^1$]

In the general formula (VII), a plurality of $Y^1$s each independently, a single bond, or a divalent C1-20 hydrocarbon group which may have an ester structure [-C(=O)-O-] and/or an ether structure (-O-). A plurality of $Y^1$s may be identical to or different from each other.

The divalent C1-20 hydrocarbon group having an ester structure and/or an ether structure may be a group represented by $-(CH_2)_{n1}-X-(CH_2)_{n2}-$ (wherein n1 and n2 each independently represent an integer of 0 to 10, provided that both n1 and n2 do not simultaneously represent 0, and at least one of n1 and n2 at a NCO binding side preferably represents 1 or more, and X represents an ester group or an ether group).

X is preferably an ester group to increase the reaction speed.

n1 and n2 preferably represent 0 to 4, and more preferably 0 to 2. Preferable combination of n1 and n2 include a combination in which n1 is 0 and n2 is 2, and a combination in which n1 is 2 and n2 is 2.

[$R^1$]

$R^1$ represents a hydrogen atom or a monovalent C1-12 hydrocarbon group. The hydrocarbon group as $R^1$ is not particularly limited, and examples thereof include an alkyl group, an alkenyl group, and an alkynyl group. $R^1$ preferably represents a hydrogen atom.

[R'a]

In the general formula (VI), R'a represents a residual group obtained by removing one hydroxyl group from a monovalent or more-valent alcohol. Examples of the monovalent or more-valent alcohol as R'a include the following alcohols.

Examples of the monovalent alcohol include saturated aliphatic alcohols such as methanol, ethanol, 1-propanol,

2-propanol, 1-butanol, 2-butanol, iso-butanol, 1-pentanol, 2-pentanol, isoamyl alcohol, 1-hexanol, 2-hexanol, 1-heptanol, 1-octanol, 2-ethyl-1-hexanol, 3,3,5-trimethyl-1-hexanol, tridecanol and pentadecanol; saturated alicyclic alcohols such as cyclohexanol and cyclopentanol; and unsaturated aliphatic alcohols such as allyl alcohol, butenol, hexenol, 2-hydroxyethyl acrylate. Among these, C1-10 saturated aliphatic alcohols such as 2-ethyl-1-hexanol are preferable.

Examples of a divalent alcohol include ethylene glycol, propanediol, 1,4-butanediol, 1,3-butanediol, 1,6-hexanediol, 1,4-hexanediol, 1,6-cyclohexanediol, 1,4-cyclohexanediol, methylpentanediol, cyclohexanedimethanol, methylpentanediol, neopentyl glycol, diethylene glycol, triethylene glycol, polyethylene glycol, polypropylene glycol, and hydrogenated bisphenol A.

Examples of a trivalent alcohol include glycerin, 2-methyl-2-hydroxymethyl-1,3-propanediol, 2,4-hydroxy-3-hydroxymethylpentane, and 1,2,6-hexanetriol.

Examples of a tetravalent alcohol include sugar alcohols such as tetritol such as erythrose, pentitol such as xylitol, and hexitol such as sorbitol.

Examples of phenols include phenol, benzyl phenol, o-cresol, p-cresol, catechol, ethylphenol, octylphenol, xylenol, naphthol, nonylphenol, and bisphenol A.

In addition, polyester polyol, polypropylene glycol, polyethylene glycol, or polytetraethylene glycol, which are obtained using the alcohol as raw materials, are suitable as monovalent or more-valent alcohols. In addition, an acrylic polyol having a hydroxyl group may be used as a monovalent or more-valent alcohol.

Examples of the method for forming an allophanate structure include a method in which heating is conducted and a method in which a catalyst is used. Although an allophanate-forming catalyst is not particularly limited, at least one compound selected from the group consisting of zirconyl compounds of formula (VIII) and zirconium alcoholates of formula (IX) is used. The zirconyl compounds are preferably used so as to obtain a polyisocyanate compound in which the generation rate of the allophanate structure is increased.

The zirconyl compound is a compound having a structure of the following general formula (VIII).

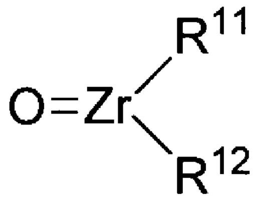

(VIII)

In the general formula (VIII), $R^{11}$ and $R^{12}$ each independently represent an alkylcarboniumoxy group, an alkoxy group, an alkyl group, a halogen group, or a residual group obtained by removing a hydrogen from an inorganic acid.

Herein, the alkylcarboniumoxy group means a residual group formed by removing hydrogen from an organic carboxylic acid. For example, when both $R^{11}$ and $R^{12}$ in the formula (VIII) are alkylcarboniumoxy groups, the zirconyl compound represents a zirconyl carboxylate. Examples of the organic carboxylic acid include aliphatic carboxylic acids, alicyclic carboxylic acids, unsaturated carboxylic acids, hydroxyl group-containing carboxylic acids and halogenated alkylcarboxylic acids, and in addition polybasic carboxylic acids such as dicarboxylic acids and tricarboxylic acids.

Specific examples of the zirconyl compound include zirconyl halide, zirconyl carboxylate, zirconyl dialkyl, zirconyl dialcoholate, zirconyl carbonate, zirconyl lead sulfate and zirconyl nitrate. Among these, zirconyl carboxylate is preferable.

Examples of the zirconyl carboxylate include: saturated aliphatic carboxylates such as zirconyl formate, zirconyl acetate, zirconyl propionate, zirconyl butanoate, zirconyl pentanoate, zirconyl hexanoate, zirconyl caproate, zirconyl octanoate, zirconyl 2-ethylhexanoate, zirconyl decanoate, zirconyl dodecanoate, zirconyl teradecanoate and zirconyl pentadecanoate; saturated cyclic carboxylates such as zirconyl cyclohexanecarboxylate and zirconyl cyclopentanecarboxylate; mixtures of the above-mentioned carboxylates such as zirconyl naphthenate; unsaturated aliphatic carboxylates such as zirconyl oleate, zirconyl linolate and zirconyl linolenate; and aromatic carboxylates such as zirconyl benzoate, zirconyl toluylate and zirconyl diphenylacetate. Among these, zirconyl naphthenate, zirconyl 2-ethylhexanoate and zirconyl acetate are particularly preferable in terms of easy industrial availability.

The zirconium alcoholate is a compound having a structure of the following general formula (IX).

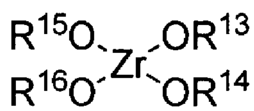

(IX)

In the general formula (IX), $R^{13}$, $R^{14}$, $R^{15}$ and $R^{16}$ each independently represent an alkyl group, an alkene group or an alkyne group.

Examples of an alcohol used as a raw material of the zirconium alcoholate include: saturated aliphatic alcohols such as methanol, ethanol, 1-propanol, 2-propanol, 1-butanol, 2-butanol, iso-butanol, 1-pentanol, 2-pentanol, isoamyl alcohol, 1-hexanol, 2-hexanol, 1-heptanol, 1-octanol, 2-ethyl-1-hexanol, 3,3,5-trimethyl-1-hexanol, tridecanol and pentadecanol; saturated alicyclic alcohol such as cyclohexanol; and unsaturated aliphatic alcohols such as ethanal, propanal, butanal and 2-hydroxyethyl acrylate. In addition, polyhydric alcohols, such as diols such as ethylene glycol, propanediol, 1,4-butanediol, 1,3-butanediol, 1,6-hexanediol, 1,4-hexanediol, 1,6-cyclohexanediol and 1,4-cyclohexanediol, and triols such as glycerol may be used. Among the zirconium alcoholates, tetra-n-propoxyzirconium, tetraisopropoxyzirconium, tetra-n-propoxyzirconium and tetra-n-butoxyzirconium are preferable in terms of easy industrial availability.
The allophanate-forming reaction temperature is preferably 60°C to 160°C, more preferably 70°C to 160°C, and even more preferably 80°C to 160°C. When the temperature is equal to or less than the upper limit, there is a tendency for the side-reaction to be suppressed and for the coloration of the resultant polyisocyanate compound to be effectively inhibited, which is preferable.
Although the allophanate-forming reaction is not particularly limited, the allophanate-forming reaction is terminated by adding, for example, an acid compound such as an acid compound of phosphoric acid, sulfuric acid, nitric acid, chloroacetic acid, benzoyl chloride and a sulfonic acid ester agent, an ion exchange resin, a chelating agent or a chelating resin, to the resultant.
Examples of the acid compound of phosphoric acid include phosphoric acid, pyrophosphoric acid, metaphosphoric acid, polyphosphoric acid and alkyl esters thereof, and it is preferable to use at least one selected from those acid compounds of phosphoric acid as a terminating agent.
The content of the polyisocyanate compound having an allophanate structure of general formula (VI), relative to the total mass of the isocyanate composition, is preferably 1% by mass to 80% by mass, more preferably 10% by mass to 75% by mass, and even more preferably 15% by mass to 70% by mass. When the content is equal to or more than the lower limit, the drying property tends to be excellent. When the content is equal to or less than the upper limit, there is a tendency for the viscosity to be low and for the workability to be excellent.

(Organic solvent)

The aqueous dispersion of isocyanate composition according to the present embodiment may contain an organic solvent.
Specific examples of the organic solvent include 1-methylpyrolidone, ethylene glycol monoethyl ether, diethylene glycol monoethyl ether, ethylene glycol monomethyl ether, diethylene glycol monomethyl ether, dipropylene glycol monomethyl ether, propylene glycol monomethyl ether, methyl ethyl ketone, acetone, methyl isobutyl ketone, propylene glycol monomethyl ether acetate, ethanol, methanol, iso-propanol, 1-propanol, iso-butanol, 1-butanol, 2-ethylhexanol, cyclohexanol, ethylene glycol, diethylene glycol, triethylene glycol, propylene glycol, dipropylene glycol, 1,4-butanediol, 1,3-butanediol, 2-n-butoxyethyl acetate, ethyl acetate, isopropyl acetate, butyl acetate, toluene, xylene, pentane, isopentane, hexane, iso-hexane, cyclohexane, solvent naphtha, mineral spirit, and at least two kinds thereof may be used in combination. The organic solvent preferably has an aqueous solubility at 20°C of 5% by mass or more in terms of the stable water-dispersion of the isocyanate composition. The boiling point of the organic solvent is preferably 100°C or more in terms that the external appearance of the coating film surface is improved. Preferable examples of the organic solvent include propylene glycol monomethyl ether acetate, dipropylene glycol monomethyl ether, 2-ethylhexanol, and 2-n-butoxyethyl acetate.
The aqueous dispersion of isocyanate composition according to the present embodiment may further contain a polyisocyanate obtained by polymerizing diisocyanates having an aliphatic, alicyclic, or aromatic isocyanate group. As the diisocyanates, the diisocyanates described regarding <other isocyanate compound> in the first embodiment are preferably available.
The polyisocyanate preferably has an isocyanurate structure, an uretdione structure, an iminooxadiazinedione structure, a urethane structure, a biuret structure, or an allophanate structure, in a molecule thereof. The isocyanurate structure, the uretdione structure, the iminooxadiazinedione structure, the urethane structure, and the biuret structure, are respectively represented by the following general formula (X), (XI), (XII), (XIII), (XIV) or (XV). Among these, in terms of the coating film hardness, a polyisocyanate having an isocyanurate structure, a polyisocyanate having an uretdione structure, and a polyisocyanate having an iminooxadiazinedione structure are preferable.

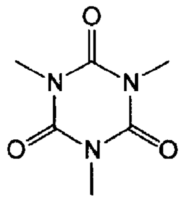

(X)

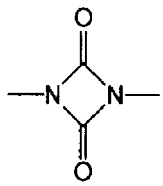

(XI)

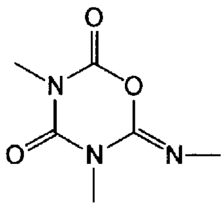

(XII)

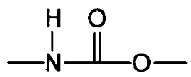

(XIII)

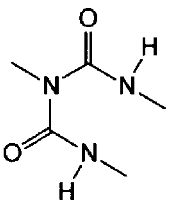

(XIV)

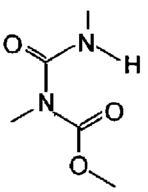

(XV)

<Production method of aqueous dispersion of isocyanate composition>

A production method of the aqueous dispersion of isocyanate composition according to the present embodiment contains a step in which an isocyanate composition is added dropwise to water while mixing the resultant by conducting stirring using a stirring blade.

The isocyanate composition to be used according to the present embodiment can be stably dispersed in water by being added dropwise thereinto. Specifically, a method in which an isocyanate composition is added dropwise into an excess amount, relative to the isocyanate composition, of water while conducting stirring using a stirring blade or the like, to mix the resultant sufficiently. Particularly, in terms of the water-dispersion stability, an isocyanate composition is added dropwise into water while conducting stirring at a rate of 500 rpm to 3000 rpm using a disper type or turbine type of stirring blade, followed by mixing the resultant preferably for 1 minute or more, and more preferably for 3 minutes or more.

In terms of the water-dispersion stability, the circumferential velocity of the stirring blade at the mixing/stirring process is preferably 0.5 m/sec to 50 m/sec, and more preferably 1 m/sec to 50 m/sec.

<Blocked isocyanate composition>

An isocyanate group of the isocyanate composition to be used in the present embodiment may be protected with a blocking agent by the same way as that of the first embodiment.

<Other isocyanate compound>

The isocyanate composition according to the present embodiment may further contain an isocyanate compound which is different from all of the triisocyanate compound of the general formula (IV), the diisocyanate compound of the general formula (V), and the polyisocyanate compound of the general formula (VI).

As the isocyanate compound, di- or poly-isocyanates having an aliphatic, alicyclic, or aromatic isocyanate group in a similar manner to those of the first embodiment are exemplary examples.

<Other compound>

The isocyanate composition according to the present embodiment may further contain 1.0 ppm by mass to $1.0\times10^4$ ppm by mass, based on the isocyanate compound, of at least one compound selected from the group consisting of unsaturated bond-containing compounds, inert compounds, metal atoms, basic amino compounds, and carbon dioxide, from the viewpoint of the coloring suppresibility and the stability improvement when stored for a long term, in a similar way to that of the first embodiment.

The content of halogen atom in the isocyanate composition according to the present embodiment is preferably $1.0\times10^2$ ppm by mass or less, in terms of the coloring suppresibility, in a similar way to that of the first embodiment.

<Coating composition>

The aqueous dispersion of isocyanate composition according to the present embodiment may be preferably used as a curing agent of a coating composition. That is, the aqueous dispersion of isocyanate composition according to the present embodiment may be contained in a coating composition. A resin component of the coating composition preferably contains a compound having at least two active hydrogens having a reactivity against an isocyanate group in a molecule thereof. Examples of the compound having at least two active hydrogens in a molecule thereof include polyols, polyamines, and polythiols. Among these, polyols are preferable. Specific examples of the polyol include polyester polyols, polyether polyols, acrylic polyols, polyolefin polyols, and fluorinated polyols.

The coating composition using the aqueous dispersion of isocyanate composition according to the present embodiment is preferably a water-based composition to be used.

In the case of a solvent-based coating composition, the solvent-based coating composition may be obtained by adding, as needed, an additional resin or an additive, such as catalyst, pigment, leveling agent, antioxidant, ultraviolet absorber, light stabilizer, plasticizer, or surfactant, to a resin containing a compound having at least two active hydrogens in a molecule thereof, or a solvent dilution thereof, followed by adding the aqueous dispersion of isocyanate composition according to the present embodiment thereto as a curing agent, further adding, as needed, a solvent thereto to adjust the viscosity of the resultant, and then stirring the resultant by hands or using a stirrer such as mazelar.

The water-based coating composition may be obtained by adding, as needed, an additional resin, or an additive, such as catalyst, pigment, leveling agent, antioxidant, ultraviolet absorber, light stabilizer, plasticizer, or surfactant, to an aqueous dispersion or an aqueous solution of a resin containing a compound having at least two active hydrogens in a molecule thereof, followed by adding the aqueous dispersion of isocyanate composition according to the present embodiment thereto as a curing agent, further adding, as needed, water or a solvent thereto, and then stirring the resultant forcibly using a stirrer.

Examples of the polyester polyol include resultants obtained by condensation reaction of a dibasic acid of a carboxylic acid, such as succinic acid, adipic acid, dimer acid, maleic anhydride, phthalic anhydride, isophthalic acid, terephthalic acid, or 1, 4-cyclohexanedicarboxylic acid, or a mixture thereof, and a polyhydric alcohol, such as ethylene glycol, propylene glycol, diethylene glycol, 1, 4-butanediol, neopentyl glycol, 1, 6-hexanediol, trimethylpentanediol, cyclohexanediol, trimethylol propane, glycerin, pentaerythritol, 2-methylolpropanediol, or ethoxylated trimethylol propane, or a mixture thereof. The condensation reaction may be conducted, for example, by mixing the above-mentioned components and then heating the mixture at approximately 160°C to 220°C. Additional examples of the polyester polyol include polycaprolactones obtained by ring-opening polymerization of lactones such as ε-caprolactone using a polyhydric alcohol. The polyester polyol may be modified using an aromatic diisocyanate, an aliphatic diisocyanate, an alicyclic diisocyanate, or a polyisocyanate obtained therefrom. In the case, an aliphatic diisocyanate, an alicyclic diisocyanate, or a polyisocyanate obtained therefrom is preferable from the viewpoint of weather resistance and yellowing resistance. In the case where the coating composition is used as a water-based coating material, carboxylic acids of the partially

remained dibasic acids are partially remained and then are neutralized with a base such as amine or ammonia to form a water-soluble or water-dispersible resin.

Examples of the polyether polyols include: polyether polyols obtained by random or block addition of an alkylene oxide (such as ethylene oxide, propylene oxide, butylene oxide, cyclohexene oxide, or styrene oxide) or a mixture thereof to a polyhydric compound or a mixture of polyhydric compounds using a hydroxide of metal (such as lithium, sodium or potassium), strong basic catalyst (such as alcoholate, or alkylamine), composite metal cyanide compound catalyst (such as metal porphyrin or zinc hexacyanocobaltate catalyst), or the like; polyether polyols obtained by reacting an alkylene oxide with a polyamine compound (such as ethylenediamine); and polymer polyols obtained by polymerizing an acrylamide or the like using any of these polyether polyols as a medium.

Examples of the polyhydric compound include: (i) diglycerin, ditrimethylol propane, pentaerythritol, and dipentaerythritol; (ii) sugar alcohol-based compounds such as erythritol, D-threitol, L-arabinitol, ribitol, xylitol, sorbitol, mannitol, galactitol, and rhamnitol; (iii) monosaccharides such as arabinose, ribose, xylose, glucose, mannose, galactose, fructose, sorbose, rhamnose, fucose, and ribodesose; (iv) disaccharides such as trehalose, sucrose, maltose, cellobiose, gentiobiose, lactose, and melibiose; (v) trisaccharides such as raffinose, gentianose, and melicitose; and (vi) tetrasaccharides such as stachyose.

The acrylic polyol may be obtained, for example, by copolymerizing a polymerizable monomer having at least one active hydrogen in a molecule thereof with another monomer copolymerizable with the polymerizable monomer.

The acrylic polyol may be obtained by conducting copolymerization by an ordinary method using, as an essential component, at least one selected from the group consisting of: active hydrogen-containing acrylic esters (such as 2-hydroxyethyl acrylate, 2-hydroxypropyl acrylate, and 2-hydroxybutyl acrylate); active hydrogen-containing methacrylic esters (such as 2-hydroxyethyl methacrylate, 2-hydroxypropyl methacrylate, 2-hydroxybutyl methacrylate, 3-hydroxypropyl methacrylate, and 4-hydroxybutyl methacrylate); polyvalent active hydrogen-containing (meth)acrylic esters such as (meth)acrylic monoesters of triols such as glycerin or trimethylol propane; monoethers of polyether polyols (such as polyethylene glycol, polypropylene glycol, or polybutylene glycol) and the above-mentioned active hydrogen-containing (meth)acrylic esters; adducts of glycidyl (meth)acrylate and monobasic acid such as acetic acid, propionic acid, or p-tert-butylbenzoic acid; and adducts obtained by ring-opening polymerization of lactones (such as ε-caprolactam or γ-valerolactone) with an active hydrogen of the above-mentioned active hydrogen-containing (meth) acrylic esters, and, as needed, at least one selected from the group consisting of: (meth)acrylic esters (such as methyl acrylate, ethyl acrylate, isopropyl acrylate, n-butyl acrylate, 2-ethylhexyl acrylate, methyl methacrylate, ethyl methacrylate, isopropyl methacrylate, n-butyl methacrylate, isobutyl methacrylate, n-hexyl methacrylate, cyclohexyl methacrylate, lauryl methacrylate, or glycidyl methacrylate), unsaturated carboxylic acids (such as acrylic acid, methacrylic acid, maleic acid, or itaconic acid), unsaturated amides (such as acrylamide, N-methylol acrylamide, or diacetone acrylamide), or hydrolyzable silyl group-containing vinyl monomers (such as vinyltrimethoxysilane, vinylmethyldimethoxysilane, or γ-(meth)acryloxypropyltrimethoxysilane), and other polymerizable monomers (such as styrene, vinyl toluene, vinyl acetate, acrylonitrile, or dibutyl fumarate).

The acrylic polyol may be obtained, for example, by conducting solution polymerization of the above-mentioned monomeric components in the presence of a radical polymerization initiator such as conventionally known peroxides or azo compounds, and then, as needed, diluting the resultant with an organic solvent or the like. The water-based acrylic polyol may be obtained by conducting solution polymerization of an olefinic unsaturated compound, followed by conducting a conventionally known method such as a method for converting the resultant into an aqueous phase or an emulsion polymerization method. In the case, the water-solubility or the water-dispersibility may be provided to the resultant by neutralizing an acidic portion of a monomer containing a carboxylic acid, such as acrylic acid or methacrylic acid, or a monomer containing a sulfonic acid, with amine or ammonia.

The fluorinated polyol is a polyol containing fluorine in a molecule thereof, and examples thereof include copolymers of fluoroolefins, cyclic vinyl ethers, hydroxyalkylvinyl ethers, vinyl monocarboxylates, or the like, as disclosed in Japanese Unexamined Patent Application Publication No. Sho 57-34107, Japanese Unexamined Patent Application Publication No. Sho 61-215311, or the like.

Although the hydroxyl value of the polyol is not particularly limited, the hydroxyl value is preferably 10 mgKOH/g to 200 mgKOH/g. Among these, the lower limit thereof is preferably 20 mgKOH/g, and more preferably 30 mgKOH/g. The acid value of the polyol is preferably 0 mgKOH/g to 30 mgKOH/g. The hydroxyl value and the acid value are determined in accordance with JIS K1557.

Among these, the polyol is preferably an acrylic polyol from the viewpoint of the weather resistance, chemical resistance, and hardness, or a polyester polyol from the viewpoint of the mechanical strength and oil resistance.

The equivalent ratio of isocyanate groups of the isocyanate composition according to the present embodiment, relative to hydroxy groups of the compound having at least two active hydrogens in a molecule thereof, (ratio of NCO/OH) is preferably 0.2 to 5.0, more preferably 0.4 to 3.0, and even more preferably 0.5 to 2.0. In the case where the equivalent ratio is equal to or more than the lower limit, the resultant coating film is provided with an enhanced strength. In the case where the equivalent ratio is equal to or less than the upper limit, the resultant coating film is provided with an improved

smoothness.

A melamine-based curing agent, such as a perfect alkyl type, a methylol type alkyl, or imino group type alkyl, may be formulated to the coating composition, as needed.

The compound having at least two active hydrogens in a molecule thereof and the isocyanate composition and the coating composition according to the present embodiment may be mixed with an organic solvent to be used. The organic solvent is preferably free from any functional groups having a reactivity with a hydroxy group and an isocyanate group. In addition, the organic solvent is preferably compatible with the polyisocyanate composition. Examples of the organic solvent include ester compounds, ether compounds, ketone compounds, aromatic compounds, ethylene glycol dialkyl ether-based compounds, polyethylene glycol dicarboxylate-based compounds, hydrocarbon-based solvents and aromatic solvents, which are generally used as coating material solvents.

The compound having at least two active hydrogens in a molecule thereof, and the isocyanate composition and the coating composition according to the present embodiment may be mixed with various additives used in the art such as catalysts, pigments, leveling agents, antioxidants, ultraviolet absorbers, light stabilizers, plasticizers, or surfactants, depending on the intended purpose or application thereof, within a rang in which effects of the present embodiment are not impaired.

Examples of a curing promoting catalyst include: metal salts such as dibutyltin dilaurate, tin 2-ethylhexanoate, zinc 2-ethylhexanoate and cobalt salts; and tertiary amines such as triethylamine, pyridine, methylpyridine, benzyldimethylamine, N,N-dimethylxcyclohexylamine, N-methylpiperidine, pentamethyldiethylenetriamine, N,N'-endoethylenepiperazine and N,N'-dimethylpiperazine.

The coating composition using the isocyanate composition according to the present embodiment as a curing agent may be used as a coating material to be applied by roll coating, curtain flow coating, spray coating, bell coating, electrostatic coating, or the like. The coating composition is useful as a primer or upper and intermediate coating material to be applied on a material such as metal (such as steel plate or surface-treated steel plate), plastic, wood, film, or inorganic material, for example. In addition, the coating composition is also useful as a coating material to be used to impart beautiful appearance, weather resistance, acid resistance, rust resistance, chipping resistance, or the like, to precoat metal such as anti-rust steel plates, vehicle coating, or the like. Moreover, the coating composition is also useful as a urethane raw material of adhesives, tackifiers, elastomers, foams, surface-treating agents, or the like.

<Coating film>

A coating film according to the third embodiment of the present invention is obtained by curing the coating composition according to the first or second embodiment. Specifically, the coating film may be formed by applying the coating composition on a base material, such as a metal, wood, glass, stone, ceramic material, cement, hard and flexible plastic, textile, leather product, paper, or the like, and then drying the resultant.

Examples

Hereinafter, although the present invention will be described further specifically by showing specific examples and comparative examples, the present invention is not limited to the following examples. The terms "parts", "%" and "ppm" means "parts by mass", "% by mass" and "ppm by mass", respectively, unless otherwise specified.

<NCO content in isocyanate composition>

The NCO content (% by mass) was determined by neutralizing isocyanate groups in a sample with an excessive amount of 2N amine, followed by subjecting the resultant to back titration using a 1N hydrochloric acid.

<Average number of repeating unit y of alkylene glycol in isocyanate composition>

The average number of y was determined by proton nuclear magnetic resonance (NMR) using an isocyanate composition as a sample and the following apparatus under the following conditions. The average number of repeating unit y of alkylene glycol in the isocyanate composition was determined by homologizing the integral value of relative intensity corresponding to an alkylene group and the integral value of relative intensity corresponding to an alkyl group.

NMR apparatus: Bruker Biospin AVANCE 600 (trade name)
Measured nucleus: 1H
Resonance frequency: 600 MHz
Solvent: $CDCl_3$
Accumulation number: 256

<Modification degree of polyalkylene glycol alkyl ether>

An isocyanate composition is used as a sample to determine the modification degree of a hydrophilic compound, relative to 100 equivalents of isocyanate groups of a raw polyisocyanate, by calculating peak area ratios of unmodified raw isocyanate, monomodified raw isocyanate, dimodified raw isocyanate, and trimodified raw isocyanate, measured by liquid chromatography (LC) at 220 nm. The used apparatus and conditions are described below

LC apparatus: UPLC (trade name) manufactured by Waters Corporation.
Column: ACQUITY UPLC HSS T3 1.8 μm, C18 inner diameter 2.1 mm × length 50 mm, manufactured by Waters Corporation.
Flow rate: 0.3 mL/min
Mobile phase: A = 10 mM ammonium acetate aqueous solution, B = acetonitrile
Gradient condition: An initial composition of mobile phase was A/B=98/2, the ratio of B was increased linearly after the sample injection, and then the composition of mobile phase after ten minutes became A/B=0/100.
Detection method: Photodiode array detector was used at a measurement wave length of 220 nm.

<Content of polyalkylene glycol alkyl ether>

An isocyanate composition was used as a sample to calculate the content of polyalkylene glycol alkyl ether of a modified polyisocyanate in the isocyanate composition, from the NCO content and the molecular weight of polyalkylene glycol alkyl ether calculated from the average number of repeating unit y of alkylene glycol, and the modification degree of polyalkylene glycol alkyl ether, as described below.

$$\text{Content (\% by mass)} = \text{NCO content (\% by mass)} / 100\% / 42 / (100 - \text{modification degree (\% by mol)}) \times \text{modification degree (\% by mol)} \times \text{number average molecular weight of polyalkylene glycol alkyl ether} \times 100\%$$

<Phosphorus atom content, relative to the total mass (100% by mass) of isocyanate composition>

The content of phosphorous atom derived from phosphoric acid groups in an isocyanate composition used as a sample was determined by inductively coupled plasma atomic emission spectroscopy (ICP-AES) using the following apparatus and conditions.

ICP-AES apparatus: iCAP 6300 Duo (trade name) manufactured by Thermo Fisher Scientific
High-frequency output: 1150W
Coolant gas: 12 L/min
Plasma gas: 0.5 L/min
Carrier gas: 0.5 L/min
Purge gas: 0.5 L/min
Torch: Horizontal axis
Detector: CID
Measured wave length: 180.731 nm

Pretreatment method: A sample was decomposed with a sulfuric acid and a hydrogen peroxide to obtain a sample solution.

<Sulfur atom content, relative to the total mass (100% by mass) of isocyanate composition>

An isocyanate composition was used as a sample to determine the content of sulfur atom derived from sulfonic acid groups in the isocyanate composition by ion chromatography (IC) using the following apparatus and conditions.

IC apparatus: ICS-1500 (trade name) manufactured by Thermo Fisher Scientific
Column: AS12A.
Mobile phase: 2.7 mmol/L $Na_2CO_3$, 0.3 mmol/L $NaHCO_3$
Flow rate: 1.5 mL/min

Sample injection volume: 1 mL
Suppressor: AERS-500
Detector: Electrical conductivity detector
Pretreatment method: A sample was burned in a furnace, and the combustion gas was absorbed by an absorbing liquid.

<Viscosity>

The viscosity was measured at 25°C using an E-type viscometer (manufactured by Tokimec, Inc.). In the measurement, a standard rotor (1° 34' × R24) was used. The number of rotation was described below.

100 rpm (at less than 128 mPa • s)
50 rpm (at 128 mPa • s to 256 mPa • s)
20 rpm (at256 mPa • s to 640 mPa • s)
10 rpm (at 640 mPa • s to 1280 mPa • s)
5 rpm (at 1280 mPa • s to 2560 mPa • s)

<Measurement of NCO group number>

The number of NCO groups was calculated by the following formula using the functional group number (3) of triisocyanate prepared in each preparation examples and the modification degree of polyalkylene glycol alkyl ether.

NCO group number = functional group number (3) of triisocyanate × (1 - modification degree of polyalkylene glycol alkyl ether / 100)

<Effective NCO content of blocked isocyanate composition>

The effective NCO content (% by mass) was calculated by the following formula.

Effective NCO content (% by mass) of blocked isocyanate composition = [(charged amount of isocyanate composition) × (NCO content (% by mass) of isocyanate composition)] / (charged amount of blocked isocyanate composition)

<Molar ratio of urea group (urea group / (NCO group + urea group))>

An isocyanate composition was dissolved in deuterated chloroform in a concentration of 10% by mass.

The solution was measured by 13C-NMR (FT-NMR DPX-400 manufactured by Bruker Corporation). A signal of a carbon atom of deuterated chloroform at 77.0 ppm was used as the standard of chemical shift. The signal area of carbon atoms of urea groups in the vicinity of 157.8 ppm and the signal area of carbon atoms of isocyanate groups in the vicinity of 121.5 ppm were measured, and the mole fraction of urea groups derived from isocyanate groups, relative to the total mol of isocyanate groups and urea groups in the isocyanate composition, was determined, based on the obtained areas.

<Decreasing degree of viscosity of isocyanate composition>

The viscosity of an isocyanate mixture was measured using an E-type viscometer (manufactured by Tokimec, Inc.) as described above except that the measured temperature was changed to conduct evaluation in accordance with the following criteria.

A: The temperature at which the viscosity reached 250 mPa • s was 25°C or less.
B: The temperature at which the viscosity reached 250 mPa • s exceeded 25°C, and the temperature at which the viscosity reached 1000 mPa • s was 25°C or less.
C: The temperature at which the viscosity reached 1000 mPa • s exceeded 25°C

< Decreasing degree of viscosity of blocked isocyanate composition>

The viscosity of a blocked isocyanate composition was measured using an E-type viscometer (manufactured by Tokimec, Inc.) as described above except that the measured temperature was changed to conduct evaluation in accordance with the following criteria.

A: The temperature at which the viscosity reached 1000 mPa • s was 25°C or less.
B: The temperature at which the viscosity reached 1000 mPa • s exceeded 25°C.

<Water dispersibility>

(1) A50 mL of an isocyanate composition or a blocked isocyanate composition was put in a PET screw bottle such that the solid content became 3 g, and then 27 g of deionized water was added thereto. (2) The mixture was stirred for 1 minute using a spatula, and then observed visually to conduct evaluation in accordance with the following criteria.

A: The mixture was easily dispersed and scarcely remained in the spatula.
B: The viscosity of the mixture increased and the mixture remained largely in the spatula.
C: The viscosity of the mixture significantly increased and it was difficult to stir the mixture.

<Evaluation of dispersibility in primary component of aqueous dispersion of isocyanate composition>

The isocyanate coating composition was applied on a glass plate such that the thickness became 40 μm after drying, and the cured at 23°C and 50% RH. After a predetermined time elapsed, the gloss of the coating film was measured using a gloss meter (a digital variable angle gloss meter UDV-6P (trade name) manufactured by Suga Test Instruments Co., Ltd.) at 60° in accordance with conditions defined in JIS Z8741.

A: 85% or more
B: 65% or more but less than 85%
C: less than 65%

<Evaluation method of drying property of isocyanate composition>

An acrylic dispersion (manufactured by Nuplex Resin under the trade name of "SETAQUA 6510" with a resin concentration of 42% and a hydroxyl group concentration of 4.2% (based on resin)) and each isocyanate composition were mixed such that the equivalent ratio of isocyanate group / hydroxy group was 1.0, and adding water thereto such that the amount of the solid content in the resultant composition was 40% by mass. The prepared coating composition was coated on a glass plate such that the thickness of the dried coating film was 40 μm, and then cured at 23°C and 50% RH. After a predetermined time elapsed, a cotton ball (having a cylindrical shape with a diameter of 2.5 cm and a high of 2.0 cm) was placed on the coating film and then 100 g of a weight was placed thereon for 60 seconds. Then, the weight and the cotton ball were removed therefrom, and the imprint of cotton ball on the coating film was observed to conduct evaluation in accordance with the following criteria.

A: The time required for the imprint to disappear completely was 7 hours or less.
B: The time was more than 7 hours but 8 hours or less.
C: The time was more than 8 hours but 10 hours or less.
D: The time was more than 10 hours.

<Evaluation of drying property of blocked isocyanate coating film>

Evaluation was conducted by the same way as that of the evaluation of drying property of isocyanate coating film except that burning was conducted at 100°C for 30 minutes after conducting coating, and the evaluation was based on the following criteria.

A: The imprint of cotton ball was not confirmed.
B: The imprint of the cotton ball was confirmed.

<Evaluation of water-resistance of isocyanate coating film>

The isocyanate coating composition was applied on an aluminum plate, which was subjected to Arozin treatment, to form a coating film having a thickness of 40 μm, and then burned for 30 minutes at 60°C when an isocyanate coating composition was used or at 120°C when a blocked isocyanate coating composition was used. Then, the coating film was cooled at 23°C and 50% RH until the next day, and then an O-ring made of silicon, the O-ring having a diameter of 30 mm, was placed on the resultant coating film, followed by pouring 0.5 g of water thereinto. The resultant was placed at 23°C for 24 hours, and then water remaining in the surface thereof was removed to observe the coating film and conduct evaluation in the following criteria.

A: The coating film was transparent and no blister was confirmed.
B: White turbidity or blister was scarcely confirmed.
C: White turbidity or blister was slightly confirmed.
D: White turbidity or blister was confirmed.

<Evaluation of water-resistance of blocked isocyanate coating film>

Evaluation was conducted by the same way as that of the evaluation of water-resistance of isocyanate coating film except that burning was conducted at 120°C for 30 minutes after conducting coating.

<Evaluation of wet-adhesion resistance of isocyanate coating film and blocked isocyanate coating film>

An acrylic dispersion (manufactured by Nuplex Resin under the trade name of "SETAQUA 6510" with a resin concentration of 42% and a hydroxyl group concentration of 4.2% (based on resin)) and water were mixed such that the final solid content became 40% by mass, and then an aqueous dispersion of the isocyanate composition was added dropwise thereto such that the equivalent ratio of isocyanate groups / hydroxyl groups became 1.25, and the resultant was mixed by conducting stirring. The prepared coating composition was applied on an aluminum plate, which was subjected to Arozin treatment, to form a coating film having a thickness of 40 μm after dring the coating film, and then the coated film was burned for 30 minutes at 140°C to cure the coating film. Water was dropped to the coating film, left still at 23°C for 24 hours, and then swabbed to conduct evaluation in accordance with JIS K5600-5-6 (coating film adherability: Cross-cut method) by counting the number of squares remaining from 100 squares.

A: 90 squares or more
B: 70 to 89 squares
C: 69 squares or less

<External appearance of coating film>

An acrylic dispersion (manufactured by Nuplex Resin under the trade name of "SETAQUA 6510" with a resin concentration of 42% and a hydroxyl group concentration of 4.2% (based on resin)) and either an isocyanate composition or a blocked isocyanate composition were mixed such that the equivalent ratio of isocyanate groups / hydroxyl groups became 1.0, and then adding water thereto such that the solid content became 40% by mass. The prepared coating composition was applied on a glass plate to form a coating film having a thickness of 40 μm, followed by burning the coating film for 30 minutes at 60°C when an isocyanate composition was used or at 120°C when a blocked isocyanate composition was used. The gloss value of the resultant coating film was measured at 20° using "haze-gloss version 3.40" (trade name) manufactured by BYK Gardner, and a measured value of a standard black glass plate having a refractive index of 1.567 was defined as 100 gloss units. The 20° gloss of the glass plate alone used to conduct coating was measured to be 174. Evaluation was conducted in accordance with the following criteria.

A: 160 or more
B: 150 or more but less than 160
C: 100 or more but less than 150
D: less than 100

<Average dispersion particle diameter>

The volume-average dispersion particle diameter of the aqueous dispersion evaluated in terms of the stability of the water dispersibility was measured using a dynamic light scattering type nanotrac particle size analyzer.

Apparatus: Nanotrac UPA-EX150 (manufactured by Nikkiso Co., Ltd.)
Solvent: Water
Temperature: 23°C

<Water-dispersion stability>

The stability of water-dispersion was evaluated by mixing water and an isocyanate composition by a predetermined method and then observing an external appearance of the mixture 1 hour immediately after the mixing procedure. The case where separation was not confirmed was evaluated as A and the case where separation was confirmed was evaluated as B.

<Evaluation of drying property of aqueous dispersion of isocyanate composition>

An acrylic dispersion (manufactured by Nuplex Resin under the trade name of "SETAQUA 6510" with a resin concentration of 42% and a hydroxyl group concentration of 4.2% (based on resin)) and water were mixed such that the final solid content of a coating composition became 40% by mass, and then an aqueous dispersion of isocyanate composition was added dropwise thereto such that the equivalent ratio of isocyanate groups / hydroxyl groups became 1.25, and the resultant was mixed by conducting stirring. The prepared coating composition was coated on a glass plate such that the thickness of the dried coating film was 40 $\mu$m, and then cured at 23°C and 50% RH. After a predetermined time elapsed, a cotton ball (having a cylindrical shape with a diameter of 2.5 cm and a high of 2.0 cm) was placed on the coating film and then 100 g of a weight was placed thereon for 60 seconds. Then, the weight and the cotton ball were removed therefrom, and the imprint of cotton ball remaining on the coating film was observed. The case where the time period required until the imprint could not be confirmed was 8 hours or less was evaluated as A, and the case where the time period exceeded 8 hours was evaluated as B.

<Evaluation of usable time of coating material >

The coating composition prepared by the method shown in the description regarding evaluation of drying property of aqueous dispersion of isocyanate composition was left still at 23°C for 6hours, and then the resultant was checked whether the precipitate generated in the coating composition. In the case where no precipitate was confirmed, evaluation of drying property was conducted again by the same way as described above. The case where the time period required until the imprint could not be confirmed was 10 hours or less was evaluated as A, the case where the time period exceeded 10 hours was evaluated as B, and the case where precipitate generated in a coating liquid was evaluated as C.

<Evaluation of water-resistance of coating film of aqueous dispersion>

An acrylic dispersion (manufactured by Nuplex Resin under the trade name of "SETAQUA 6510" with a resin concentration of 42% and a hydroxyl group concentration of 4.2% (based on resin)) and water were mixed such that the final solid content of a coating composition became 40% by mass, and then the aqueous dispersion of isocyanate composition was added dropwise thereto such that the equivalent ratio of isocyanate groups / hydroxyl groups became 1.25, and the resultant was mixed by conducting stirring. The prepared coating composition was coated on a glass plate such that the thickness of the dried coating film was 40 $\mu$m, and then heated at 140°C for 30 minutes to be cured. A rubber ring having a diameter of 2 cm was placed on the resultant coating film, and water was dropped thereinto. A watch glass was placed thereon so as to prevent volatilization, and left still at 23°C for 2 days. After two days, moisture was removed, and haze values before and after dropping water were measured. The haze value of the coating film was measured in accordance with IS K7361 using HAZE METER, trade name, manufactured by Suga Test Instruments Co., Ltd. The case where the change in the haze values was less than 0.5 was evaluated as A, and the case where the change in the haze values was 0.5 or more was evaluated as B.

(Preparation Example 1) Synthesis of LTI

122.2 g of ethanol amine, 100 ml of o-dichlorobenzene, and 420 ml of toluene were put into a four-necked flask equipped with a stirrer, a thermometer, and a gas inlet tube, and then hydrogen chloride gas was introduced therein under ice-cooling to convert the ethanol amine into a hydrochloride. Then, 182.5 g of lysine hydrochloride was added to the resultant, and then the reaction liquid was heated at 80°C to dissolve the ethanol amine hydrochloride therein, followed by introducing a hydrogen chloride gas thereinto to obtain lysine dihydrochloride. In addition, a hydrogen chloride gas was passed therethrough at a rate of 20 to 30 ml/minute, and the reaction liquid was heated at 116°C until water

was not distilled off. The resultant reaction mixture was recrystallized in a mixture liquid composed of methanol and ethanol to obtain 165 g of a lysine β-aminoethyl ester trihydrochloride. 100 g of the lysine β-aminoethyl ester trihydrochloride was pulverized to fine powders, and then suspended in 1200 ml of o-dichlorobenzene, followed by heating the reaction liquid while conducting stirring. When the reaction temperature reached 120°C, phosgene was blown into the reaction liquid at a rate of 0.4 mol/hour over 10 hours, followed by heating the reaction liquid to 150°C. The suspension was almost dissolved. After the resultant was cooled and then subjected to filtration, the dissolved phosgene and solvent were distilled off under the reduced pressure, and then the resultant was subjected to vacuum distillation to obtain 80.4 g of a colorless and transparent LTI having a boiling point of 155 to 157°C / 0.022 mmHg. The NCO content thereof was 47.1% by mass.

(Preparation Example 2) Synthesis of GTI

275 g of glutamic acid hydrochloride, 800 g of ethanolamine hydrochloride, and 150 ml of toluene were put into a four-necked flask equipped with a stirrer, a thermometer, and a gas inlet tube, and then the mixture was heated to reflux at 1 10°C for 24 hours while blowing a hydrogen chloride gas thereinto until azeotropy of water was not confirmed. The reaction mixture was recrystallized in a mixture liquid composed of methanol and ethanol to obtain 270 g of bis(2-aminoethyl)glutamate trihydrochloride. 85 g of the bis(2-aminoethyl)glutamate trihydrochloride was suspended in 680 g of o-dichlorobenzene, and then the temperature of the reaction liquid was raised while conducting stirring. When the temperature reached 135°C, a phosgene was blown thereinto at a rate of 0.8 mol/hour over 13 hours, followed by filtering the resultant, conducting vacuum concentration and then purification with a thin-film evaporator to obtain 54 g of GTI. The NCO content was 39.8% by mass.

(Preparation Example 3) Synthesis of NTI

1060 g of 4-aminomethyl-1,8-octamethylene diamine (hereinafter, referred to as triamine) was dissolved in 1500 g of methanol in a four-necked flask equipped with a stirrer, a thermometer, and a gas inlet tube, and then 1800 ml of 35% concentrated hydrochloric acid was added dropwise into the resultant soluction gradually while conducting cooling. The resultant was concentrated by removing methanol and water therefrom under the reduced pressure, and then dried at 60°C and 5 mmHg for 24 hours to obtain a white solid triamine hydrochloride. 650 g of the resultant triamine hydrochloride was pulverized to fine powders, and then suspended in 5000 g of o-dichlorobenzene, followed by raising the temperature of the reaction liquid while conducting stirring. When the temperature reached 100°C, a phosgene was blown thereinto at a rate of 200 g/Hr, while continuing temperature rising till 180°C, followed by maintaining the temperature at 180°C while blowing the phosgene thereinto over 12 hours. The dissolved phosgene and solvent were distilled off under the reduced pressure, followed by conducting vacuum distillation to obtain 420 g of a colorless and transparent 4-isocyanate methyl-1,8-octanemethylene diisocyanate (hereinafter, referred to as "NTI") having a boiling point of 161 to 163°C / 1.2 mmHg. The NCO content thereof was 50.0% by mass.

(Preparation Example 4) Synthesis of HDI polyisocyanate

50 g of HDI as a monomer and 0.05 g of isobutanol were charged into a four-necked flask equipped with a stirrer, a thermometer, and a gas inlet tube, and the temperature of the mixture was maintained at 80°C for 2 hours. Thereafter, 5 mg of benzyl trimethylammonium hydroxide, which was an isocyanurate-forming catalyst, was added to the mixture to allow the isocyanurate-forming reaction to proceed. When the yield reached 12%, dibutylphosphate was added to the resultant to terminate the reaction. The reaction liquid was further maintained at 120°C for 15 minutes to obtain a HDI polyisocyanate. The viscosity of the resultant HDI polyisocyanate was 2,300 mPa • s at 25°C, and the NCO content thereof was 4% by mass.

(Preparation Example 5) Preparation of amine sulfonate 1

10 parts by mass of 1-propanol was added to 20 parts by mass of an aqueous solution containing 70% by mass of 2-hydroxyethanesulfonate, and then stirred to obtain a solution. A triethylamine was weighed such that an equivalent ratio became 1 and then diluted with the same mass of 1-propanol, followed by adding the resultant dilution dropwise into the stirring solution. The stirring was stopped 1 hour after the start of the dropwise addition, water and the solvent were removed from the resultant using an evaporator to obtain trimethylamine 2-hydroxyethanesulfonate (amine sulfonate 1) having a solid content of 99.0% by mass.

(Preparation Example 6) Preparation of amine sulfonate 2

10 parts by mass of 1-propanol was added to 20 parts by mass of an aqueous solution containing 70% by mass of 2-hydroxyethanesulfonate, and then stirred to obtain a solution. In addition, a N,N-diisopropylethylamine was weighed such that an equivalent ratio became 1 and then diluted with the same mass of 1-propanol, followed by adding the resultant dilution dropwise into the stirring solution. The stirring was stopped 1 hour after the start of the dropwise addition, water and the solvent were removed from the resultant using an evaporator to obtain N,N-diisopropylethylamine 2-hydroxyethanesulfonate (amine sulfonate 2) having a solid content of 99.1% by mass.

(Preparation Example 7) Preparation of amine sulfonate 3

10 parts by mass of 1-propanol was added to 20 parts by mass of an aqueous solution containing 70% by mass of 2-hydroxyethanesulfonate, and then stirred to obtain a solution. In addition, a tributylamine was weighed such that an equivalent ratio became 1 and then diluted with the same mass of 1-propanol, followed by adding the resultant dilution dropwise into the stirring solution. The stirring was stopped 1 hour after the start of the dropwise addition, water and the solvent were removed from the resultant using an evaporator to obtain tributylamine 2-hydroxyethanesulfonate (amine sulfonate 3) having a solid content of 99.1% by mass.

(Preparation Example 8) Preparation of amine sulfonate 4

10 parts by mass of 1-propanol was added to 20 parts by mass of an aqueous solution containing 70% by mass of 2-hydroxyethanesulfonate, and then stirred to obtain a solution. In addition, a N,N-dimethylcyclohexylamine was weighed such that an equivalent ratio became 1 and then diluted with the same mass of 1-propanol, followed by adding the resultant dilution dropwise into the stirring solution. The stirring was stopped 1 hour after the start of the dropwise addition, water and the solvent were removed from the resultant using an evaporator to obtain N,N-dimethylcyclohexylamine 2-hydroxyethanesulfonate (amine sulfonate 4) having a solid content of 99.8% by mass.

(Synthesis Example 1) Synthesis of P-1

50 g of NT1 as a monomer and 4.6 g of 2-ethylhexanol were charged into a four-necked flask equipped with a stirrer, a thermometer, a reflux condenser, and a nitrogen inlet tube, under nitrogen atmosphere, and the temperature thereof was maintained at 90°C for 1 hour. Then, the temperature was raised to 130°C, 2 mg of a mineral spirits solution of zirconyl 2-ethylhexanoate, which is an allophanate-forming catalyst, having a solid content of 20% ("NIKKA OCTHIX ZIRCONIUM 13%", trade name, manufactured by NIHON KAGAKU SANGYO CO.,LTD., was diluted with mineral spirits) was added to the resultant to allow the allophanate-forming to proceed, followed by adding an isobutanol solution of pyrophosphoric acid having a solid content of 50% (a reagent manufactured by Katayama Chemical Industries Co., Ltd., was diluted with isobutanol) was added to the resultant to terminate the reaction, and thus a polyisocyanate P-1 was obtained. The viscosity of the obtained polyisocyanate P-1 was 27 mPa • s at 25°C.

(Synthesis Example 2) Synthesis of P-2

50 g of hexamethylene diisocyanate and 4.0 g of 2-ethylhexanol were charged in a four-necked flask equipped with a stirrer, a thermometer, a reflux condenser, and a nitrogen inlet tube under nitrogen atmosphere, and the temperature thereof was maintained at 90°C for 1 hour. Then, the temperature was raised to 130°C, 2 mg of a mineral spirits solution of zirconyl 2-ethylhexanoate, which is an allophanate-forming catalyst, having a solid content of 20% ("NIKKA OCTHIX ZIRCONIUM 13%", trade name, manufactured by NIHON KAGAKU SANGYO CO.,LTD., was diluted with mineral spirits) was added to the resultant to allow the allophanate-forming to proceed, followed by adding an isobutanol solution of pyrophosphoric acid having a solid content of 50% (a reagent manufactured by Katayama Chemical Industries Co., Ltd., was diluted with isobutanol) was added to the resultant to terminate the reaction, and thus a polyisocyanate P-2 was obtained. The viscosity of the obtained polyisocyanate P-2 was 15 mPa • s at 25°C.

(Synthesis Example 3) Synthesis of P-3

12.5 parts by mass of polyethylene glycol monomethyl ether (manufactured by NIPPON NYUKAZAI CO., LTD., under the trade name of "MPG-130"), in which the average number of ethylene glycol repeating units was 9.0, was added to 50 parts by mass of NTI in a four-necked flask equipped with a stirrer, a thermometer, a reflux condenser, and a nitrogen inlet tube, and then the mixture was stirred at 100°C for 4 hours under nitrogen atmosphere to allow the reaction to proceed. After the reaction ended, polyisocyanate P-3 was obtained. The viscosity of the obtained polyisocyanate P-3 was 15 mPa • s at 25°C, and the content of polyalkylene glycol alkyl ether was 19% by mass.

(Synthesis Example 4) Synthesis of P-4

0.5 parts by mass of polyethylene glycol monomethyl ether (manufactured by NIPPON NYUKAZAI CO., LTD., under the trade name of "MPG-130"), in which the average number of ethylene glycol repeating units was 9.0, was added to 50 parts by mass of P-1 in a four-necked flask equipped with a stirrer, a thermometer, a reflux condenser, and a nitrogen inlet tube, and then the mixture was stirred at 100°C for 4 hours under nitrogen atmosphere to allow the reaction to proceed. After the reaction ended, polyisocyanate P-4 was obtained. The viscosity of the obtained polyisocyanate P-4 was 30 mPa • s at 25°C, and the content of polyalkylene glycol alkyl ether was 1 % by mass.

(Synthesis Example 5) Synthesis of P-5

1.0 part by mass of polyethylene glycol monomethyl ether (manufactured by NIPPON NYUKAZAI CO., LTD., under the trade name of "MPG-081"), in which the average number of ethylene glycol repeating units was 15.0, was added to 99.0 parts by mass of LTI in a four-necked flask equipped with a stirrer, a thermometer, a reflux condenser, and a nitrogen inlet tube, and then the mixture was stirred at 100°C for 4 hours under nitrogen atmosphere to allow the reaction to proceed. After the reaction ended, isocyanate composition P-5 was obtained. The viscosity of the obtained isocyanate composition P-5 was 28 mPa • s at 25°C, and the content of polyalkylene glycol alkyl ether was 1% by mass.

(Example 1-1) <u>(not according to the invention)</u>

40.0 parts by mass of polyethylene glycol monomethyl ether (manufactured by NIPPON NYUKAZAI CO., LTD., under the trade name of "MPG"), in which the average number of ethylene glycol repeating units was 4.2, and 0.03 parts by mass of water were added to 60.0 parts by mass of LTI, and then the mixture was stirred at 100°C for 4 hours under nitrogen atmosphere to allow the reaction to proceed. After the reaction ended, an isocyanate composition was obtained.

The obtained isocyanate composition had a non-volatile content of 100% by mass, a viscosity of 40 mPa • s (25°C), and a NCO content of 28.3% by mass. The modification degree of the obtained composition was 22.2% by mol, and the average number of ethylene glycol repeating units detected by NMR was 4.1. Thus, the content of polyethylene glycol monomethyl ether was calculated to be 40%. Evaluation results are shown in Table 1.

(Example 1-2) <u>(not according to the invention)</u>

25.7 parts by mass of polyethylene glycol monomethyl ether (manufactured by NIPPON NYUKAZAI CO., LTD., under the trade name of "MPG"), in which the average number of ethylene glycol repeating units was 4.2, 10.3 parts by mass of polyethylene glycol monomethyl ether (manufactured by NIPPON NYUKAZAI CO., LTD., under the trade name of "MPG-130", having a number average molecular weight of 130), in which the average number of ethylene glycol repeating units was 9.0, and 0.03 parts by mass of water were added to 64.0 parts by mass of LTI to adjust the average number of ethylene glycol repeating units to 5.0, and then the mixture was stirred at 100°C for 4 hours under nitrogen atmosphere to allow the reaction to proceed. After the reaction ended, an isocyanate composition was obtained. Evaluation results are shown in Table 1.

(Example 1-3) (not according to the invention)

13.8 parts by mass of polyethylene glycol monomethyl ether (manufactured by NIPPON NYUKAZAI CO., LTD., under the trade name of "MPG"), in which the average number of ethylene glycol repeating units was 4.2, and 16.2 parts by mass of polyethylene glycol monomethyl ether (manufactured by NIPPON NYUKAZAI CO., LTD., under the trade name of "MPG-130"), in which the average number of ethylene glycol repeating units was 9.0, were added to 70.0 parts by mass of LTI to adjust the average number of ethylene glycol repeating units to 6.0, and then 0.03 parts by mass of water was added thereto, followed by stirring the mixture at 100°C for 4 hours under nitrogen atmosphere to allow the reaction to proceed. After the reaction ended, an isocyanate composition was obtained. Evaluation results are shown in Table 1.

(Example 1-4) (not according to the invention)

20.0 parts by mass of polyethylene glycol monomethyl ether (manufactured by NIPPON NYUKAZAI CO., LTD., under the trade name of "MPG-130"), in which the average number of ethylene glycol repeating units was 9.0, and 0.03 parts by mass of water were added to 80.0 parts by mass of LTI, followed by stirring the mixture at 100°C for 4 hours

under nitrogen atmosphere to allow the reaction to proceed. After the reaction ended, an isocyanate composition was obtained. Evaluation results are shown in Table 1.

(Example 1-5) (not according to the invention)

20.0 parts by mass of polyethylene glycol monomethyl ether (manufactured by NOF CORPORATION, under the trade name of "M550", in which the average number of ethylene glycol repeating units was 11.8) having a number average molecular weight of 550, and 0.03 parts by mass of water were added to 80.0 parts by mass of LTI, followed by stirring the mixture at 100°C for 4 hours under nitrogen atmosphere to allow the reaction to proceed. After the reaction ended, an isocyanate composition was obtained. Evaluation results are shown in Table 2.

(Example 1-6) (not according to the invention)

8.0 parts by mass of polyethylene glycol monomethyl ether (manufactured by NIPPON NYUKAZAI CO., LTD., under the trade name of "MPG-081", having a number average molecular weight of 81) in which the average number of ethylene glycol repeating units was 15.0, and 0.03 parts by mass of water were added to 92.0 parts by mass of LTI, followed by stirring the mixture at 100°C for 4 hours under nitrogen atmosphere to allow the reaction to proceed. After the reaction ended, an isocyanate composition was obtained. Evaluation results are shown in Table 2.

(Example 1-7) (not according to the invention)

5.0 parts by mass of polyethylene glycol monomethyl ether (manufactured by The Dow Chemical Company under the trade name of "750", in which the average number of ethylene glycol repeating units was 16.3) having a number average molecular weight of 750, and 0.03 parts by mass of water were added to 95.0 parts by mass of LTI, followed by stirring the mixture at 100°C for 4 hours under nitrogen atmosphere to allow the reaction to proceed. After the reaction ended, an isocyanate composition was obtained. Evaluation results are shown in Table 2.

(Example 1-8) (not according to the invention)

20.0 parts by mass of polyethylene glycol monomethyl ether (manufactured by NOF CORPORATION under the trade name of "M1000", in which the average number of ethylene glycol repeating units was 22.0) having a number average molecular weight of 1000, and 0.03 parts by mass of water were added to 80.0 parts by mass of LTI, followed by stirring the mixture at 100°C for 4 hours under nitrogen atmosphere to allow the reaction to proceed. After the reaction ended, an isocyanate composition was obtained. Evaluation results are shown in Table 2.

(Example 1-9) (not according to the invention)

40.0 parts by mass of polyethylene glycol monomethyl ether (manufactured by NIPPON NYUKAZAI CO., LTD., under the trade name of "MPG-130"), in which the average number of ethylene glycol repeating units was 9.0, and 0.03 parts by mass of water were added to 60.0 parts by mass of LTI, followed by stirring the mixture at 100°C for 4 hours under nitrogen atmosphere to allow the reaction to proceed. After the reaction ended, an isocyanate composition was obtained. Evaluation results are shown in Table 2.

(Example 1-10) (not according to the invention)

10 parts by mass of polyethylene glycol monomethyl ether (manufactured by NIPPON NYUKAZAI CO., LTD., under the trade name of "MPG-130"), in which the average number of ethylene glycol repeating units was 9.0, and 0.03 parts by mass of water were added to 90.0 parts by mass of LTI, followed by stirring the mixture at 100°C for 4 hours under nitrogen atmosphere to allow the reaction to proceed. After the reaction ended, an isocyanate composition was obtained. Evaluation results are shown in Table 3.

(Example 1-11) (not according to the invention)

The isocyanate composition described in Example 1-4 and the HDI polyisocyanate described in Preparation Example 4 were mixed in the mass ratio of 90/10. Evaluation results are shown in Table 3.

(Example 1-12) (not according to the invention)

20 g of monobutyl phosphate and 13.0 g of trimethylamine were mixed to neutralize a part of monobutyl phosphate. 33.0 parts by mass of the resultant mixture of monobutyl phosphate and trimethylamine and 0.3 parts by mass of water were added to 1000 parts by mass of LTI, followed by stirring the mixture at 90°C for 4 hours under nitrogen atmosphere to allow the reaction to proceed. After the reaction ended, an isocyanate composition was obtained. The following measurements were conducted by the same way as Example 1-1. The phosphorus atom content detected by ICP-AES was 0.38% by mass. Evaluation results are shown in Table 3.

(Example 1-13) (not according to the invention)

10 g of monobutyl phosphate and 6.5 g of trimethylamine were mixed to neutralize a part of monobutyl phosphate. 100 parts by mass of polyethylene glycol monomethyl ether (manufactured by NOF CORPORATION under the trade name of "M400", in which the average number of ethylene glycol repeating units was 8.4), 16.5 parts by mass of the resultant mixture of monobutyl phosphate and trimethylamine, and 0.3 parts by mass of water were added to 1000 parts by mass of LTI, followed by stirring the mixture at 90°C for 4 hours under nitrogen atmosphere to allow the reaction to proceed. After the reaction ended, an isocyanate composition was obtained. The following measurements were conducted by the same way as Example 1-12. Evaluation results are shown in Table 4.

(Example 1-14) (not according to the invention)

6.1 parts by mass of 3-cyclohexylaminopropanesulfonic acid, 3.5 parts by mass of N,N-dimethylcyclohexylamine, and 0.3 parts by mass of water were added to 1000 parts by mass of LTI, followed by stirring the mixture at 100°C for 5 hours under nitrogen atmosphere to allow the reaction to proceed. After the reaction ended, an isocyanate composition was obtained. The following measurements were conducted by the same way as Example 1-1. The sulfur atom content detected by ion chromatography was 0.09% by mass. Evaluation results are shown in Table 4.

(Example 1-15) (not according to the invention)

12.5 parts by mass of triethylamine 2-hydroxyethanesulfonate (amine sulfonate 1) obtained in Preparation Example 5, 200 parts by mass of acetone, and 0.05 parts by mass of dibutyltin dilaurate were added to 1000 parts by mass of LTI, followed by stirring the mixture at 70°C for 5 hours while conducting reflux under nitrogen atmosphere to allow the reaction to proceed. Thereafter, a reflux apparatus was removed, 0.3 parts by mass of water was added to the resultant, and then stirred at 100°C for 0.5 hours to maintain the reaction. After the reaction ended, an isocyanate composition was obtained. The following measurements were conducted by the same way as Example 1-14. Evaluation results are shown in Table 4.

(Example 1-16) (not according to the invention)

27.7 parts by mass of N,N-diisopropylethylamine 2-hydroxyethanesulfonate (amine sulfonate 2) obtained in Preparation Example 6, 200 parts by mass of acetone, and 0.05 parts by mass of dibutyltin dilaurate were added to 1000 parts by mass of LTI, followed by stirring the mixture at 70°C for 5 hours while conducting reflux under nitrogen atmosphere to allow the reaction to proceed. Thereafter, a reflux apparatus was removed, 0.3 parts by mass of water was added to the resultant, and then stirred at 100°C for 0.5 hours to maintain the reaction. After the reaction ended, an isocyanate composition was obtained. The following measurements were conducted by the same way as Example 1-14. Evaluation results are shown in Table 5.

(Example 1-17) (not according to the invention)

85.5 parts by mass of tributylamine 2-hydroxyethanesulfonate (amine sulfonate 3) obtained in Preparation Example 7, and 0.3 parts by mass of water were added to 1000 parts by mass of LTI, followed by stirring the mixture at 100°C for 6 hours under nitrogen atmosphere to allow the reaction to proceed. After the reaction ended, an isocyanate composition was obtained. The following measurements were conducted by the same way as Example 1-14. Evaluation results are shown in Table 5.

(Example 1-18) (not according to the invention)

7.0 parts by mass of N,N-dimethylcyclohexylamine 2-hydroxyethanesulfonate (amine sulfonate 4) obtained in

Preparation Example 8, 20.0 parts by mass of polyethylene glycol monomethyl ether (manufactured by NIPPON NYUKAZAI CO., LTD., under the trade name of "MPG-130") in which the average number of ethylene glycol repeating units was 9.0, and 0.3 parts by mass of water were added to 1000 parts by mass of LTI, followed by stirring the mixture at 100°C for 4 hours under nitrogen atmosphere to allow the reaction to proceed. After the reaction ended, an isocyanate composition was obtained. The following measurements were conducted by the same way as Example 1-14. Evaluation results are shown in Table 5.

(Example 1-19) (not according to the invention)

The reaction was conducted by the same way as Example 1-4, except that GTI was used instead of LTI, to obtain an isocyanate composition. Evaluation results are shown in Table 5.

(Example 1-20) (not according to the invention)

The reaction was conducted by the same way as Example 1-4, except that the addition amount of water was 0.01 parts by mass, to obtain an isocyanate composition. Evaluation results are shown in Table 6.

(Example 1-21) (not according to the invention)

The reaction was conducted by the same way as Example 1-4, except that the addition amount of water was 0.1 parts by mass, to obtain an isocyanate composition. Evaluation results are shown in Table 6.

(Example 1-22) (not according to the invention)

The reaction was conducted by the same way as Example 1-4, except that MPG-130 containing 1000 ppm of water was used as a raw material, to obtain an isocyanate composition. Evaluation results are shown in Table 6.

(Comparative Example 1-1)

The reaction was conducted by the same way as Example 1-4, except that a HDI polyisocyanate prepared in Preparation Example 4 was used instead of LTI, to obtain an isocyanate composition. Evaluation results are shown in Table 6.

(Example 1-23) (not according to the invention)

75.5 parts by mass of dipropylene glycol dimethyl ether (resin solid content: 70% by mass) was added to the isocyanate composition prepared in Example 1-4, and then the mixture was heated at 70°C. Thereafter, 84.4 parts by mass of 3,5-dimethylpyrazole (1.03 molar times relative to NCO) was added thereto while conducting stirring, and then the mixture was stirred at 70°C for 1 hour, to obtain a blocked isocyanate composition. Evaluation results of the resultant blocked isocyanate composition are shown in Table 7.

(Example 1-24) (not according to the invention)

A blocked isocyanate composition was obtained by the same way as that of Example 1-23, except that the isocyanate composition prepared in Example 1-18 was used as an isocyanate composition. Evaluation results are shown in Table 7.

(Comparative Example 1-3)

A blocked isocyanate composition was obtained by the same way as that of Example 1-23, except that the isocyanate composition prepared in Comparative Example 1-1 was used as an isocyanate composition. Evaluation results are shown in Table 7.

Table 1

| | Example1-1 | Example1-2 | Example1-3 | Example1-4 |
|---|---|---|---|---|
| Starting isocyanate | LTI | LTI | LTI | LTI |
| Hydrophilic compound | MPG | MPG<br>MPG-130 | MPG<br>MPG-130 | MPG-130 |
| Amount of water [ppm/total resin] | 300 | 300 | 300 | 300 |
| NCO content [wt%] | 28.3 | 34.9 | 33.0 | 37.7 |
| Average number of repeating unit y of alkylene glycol | 4 | 5 | 6 | 9 |
| Content of polyalkylene glycol alkyl ether [% by mass] | 40 | 36 | 30 | 20 |
| Modification degree of polyalkylene glycol alkyl ether [% by mol] | 22.2 | 16.6 | 11.4 | 5.0 |
| Phosphorus atom content [% by mass] | - | - | - | - |
| Sulfur atom content [% by mass] | - | - | - | - |
| Molar ratio of urea group (urea group / (NCO group + urea group)) [% by mol] | 0.46 | 0.43 | 0.45 | 0.44 |
| Viscosity [mPa·s/25°C] | 40 | 34 | 33 | 30 |
| Number of NCO group | 2.3 | 2.5 | 2.7 | 2.9 |
| Decreasing degree of viscosity | A | A | A | A |
| Water dispersibility | A | A | A | A |
| Drying property | B | B | A | A |
| Water-resistance | B | B | A | A |
| Wet-adhesion resistance | B | B | A | A |
| Dispersibility in primary component | B | B | A | A |

Table 2

| | Example 1-5 | Example 1-6 | Example 1-7 | Example 1-8 | Example 1-9 |
|---|---|---|---|---|---|
| Starting isocyanate | LTI | LTI | LTI | LTI | LTI |
| Hydrophilic compound | M550 | MPG-081 | 750 | M1000 | MPG-130 |
| Amount of water [ppm/total resin] | 300 | 300 | 300 | 300 | 300 |
| NCO content [wt%] | 37.7 | 43.3 | 44.7 | 25.8 | 28.3 |
| Average number of repeating unit y of alkylene glycol | 11.8 | 15 | 16.3 | 22 | 9 |
| Content of polyalkylene glycol alkyl ether [% by mass] | 20 | 8 | 5 | 30 | 40 |
| Modification degree of polyalkylene glycol alkyl ether [% by mol] | 3.9 | 1.1 | 0.6 | 3.8 | 12.2 |
| Phosphorus atom content [% by mass] | - | - | - | - | - |
| Sulfur atom content [% by mass] | - | - | - | - | - |
| Molar ratio of urea group (urea group / (NCO group + urea group)) [% by mol] | 0.38 | 0.44 | 0.39 | 0.52 | 0.41 |
| Viscosity [mPa·s/25°C] | 29 | 27 | 26 | 50 | 52 |
| Number of NCO group | 2.9 | 2.8 | 2.9 | 2.9 | 2.6 |
| Decreasing degree of viscosity | A | A | A | A | A |
| Water dispersibility | A | B | B | B | A |
| Drying property | A | A | A | A | B |
| Water-resistance | A | A | A | A | B |
| Wet-adhesion resistance | A | A | A | B | B |
| Dispersibility in primary component | A | A | A | B | B |

Table 3

| | Example 1-10 | Example 1-11 | Example 1-12 |
|---|---|---|---|
| Starting isocyanate | LTI | Example 1-4 /HDI polyisocyanate =90/10(mass ratio) | LTI |
| Hydrophilic compound | MPG-130 | | Triethylamine monobutyl phosphate |
| Amount of water [ppm/total resin] | 300 | | 290 |
| NCO content [wt%] | 42.4 | | 42.4 |
| Average number of repeating unit y of alkylene glycol | 9 | | - |
| Content of polyalkylene glycol alkyl ether [% by mass] | 10 | | - |
| Modification degree of polyalkylene glycol alkyl ether [% by mol] | 2.3 | | - |
| Phosphorus atom content [% by mass] | - | | 0.38 |
| Sulfur atom content [% by mass] | - | | - |
| Molar ratio of urea group (urea group / (NCO group + urea group)) [% by mol] | 0.37 | 0.35 | 0.32 |
| Viscosity [mPa·s/25°C] | 29 | 160 | 30 |
| Number of NCO group | 2.9 | 3.0 | 2.9 |
| Decreasing degree of viscosity | A | A | A |
| Water dispersibility | A | A | A |
| Drying property | A | A | A |
| Water-resistance | A | A | A |
| Wet-adhesion resistance | A | A | A |
| Dispersibility in primary component | A | A | A |

Table 4

| | Example 1-13 | Example 1-14 | Example 1-15 |
|---|---|---|---|
| Starting isocyanate | LTI | LTI | LTI |
| Hydrophilic compound | Triethylamine monobutyl phosphate | 3-cyclohexyl aminopropane sulfonic acid | Amine sulfonate 1 |
| Amount of water [ppm/total resin] | 270 | 300 | 300 |
| NCO content [wt%] | 45.2 | 43.3 | 40.0 |
| Average number of repeating unit y of alkylene glycol | - | - | - |
| Content of polyalkylene glycol alkyl ether [% by mass] | - | - | - |
| Modification degree of polyalkylene glycol alkyl ether [% by mol] | - | - | - |
| Phosphorus atom content [% by mass] | 0.18 | - | - |
| Sulfur atom content [% by mass] | - | 0.09 | 0.17 |
| Molar ratio of urea group (urea group / (NCO group + urea group)) [% by mol] | 0.34 | 0.31 | 0.32 |
| Viscosity [mPa·s/25°C] | 28 | 31 | 33 |
| Number of NCO group | 2.9 | 2.9 | 2.9 |
| Decreasing degree of viscosity | A | A | A |
| Water dispersibility | A | A | A |
| Drying property | A | A | A |
| Water-resistance | A | A | A |
| Wet-adhesion resistance | A | A | A |
| Dispersibility in primary component | A | A | A |

Table 5

| | Example 1-16 | Example 1-17 | Example 1-18 | Example 1-19 |
|---|---|---|---|---|
| Starting isocyanate | LTI | LTI | LTI | GTI |
| Hydrophilic compound | Amine sulfonate 2 | Amine sulfonate 3 | Amine sulfonate 4 MPG-130 | MPG-130 |
| Amount of water [ppm/total resin] | 290 | 280 | 290 | 300 |
| NCO content [wt%] | 46.2 | 46.0 | 46.8 | 37.7 |
| Average number of repeating unit y of alkylene glycol | - | - | - | 9 |
| Content of polyalkylene glycol alkyl ether [% by mass] | - | - | - | 5.8 |
| Modification degree of polyalkylene glycol alkyl ether [% by mol] | - | - | - | 20 |
| Phosphorus atom content [% by mass] | - | - | - | - |
| Sulfur atom content [% by mass] | 0.34 | 0.80 | 0.09 | - |
| Molar ratio of urea group (urea group / (NCO group + urea group)) [% by mol] | 0.35 | 0.29 | 0.30 | 0.36 |
| Viscosity [mPa·s/25°C] | 27 | 33 | 31 | 30 |
| Number of NCO group | 3.0 | 2.9 | 3.0 | 2.9 |
| Decreasing degree of viscosity | A | A | A | A |
| Water dispersibility | A | A | B | A |
| Drying property | A | A | A | A |
| Water-resistance | A | A | A | A |
| Wet-adhesion resistance | A | A | A | A |
| Dispersibility in primary component | A | A | A | A |

Table 6

| | Example 1-20 | Example 1-21 | Example 1-22 | Comparative Example1-1 |
|---|---|---|---|---|
| Starting isocyanate | LTI | LTI | LTI | HDI polyisocyanate |
| Hydrophilic compound | MPG-130 | MPG-130 | MPG-130 | MPG-130 |
| Amount of water [ppm/total resin] | 100 | 1000 | 150 | 300 |
| NCO content [wt%] | 37.7 | 37.7 | 37.7 | 16.4 |
| Average number of repeating unit y of alkylene glycol | 9 | 9 | 9 | 9 |
| Content of polyalkylene glycol alkyl ether [% by mass] | 20 | 20 | 20 | 10.2 |
| Modification degree of polyalkylene glycol alkyl ether [% by mol] | 5.0 | 5.0 | 5.0 | 20 |
| Phosphorus atom content [% by mass] | - | - | - | - |
| Sulfur atom content [% by mass] | - | - | - | - |
| Molar ratio of urea group (urea group / (NCO group + urea group)) [% by mol] | 0.07 | 1.47 | 0.17 | 0.29 |
| Viscosity [mPa•s/25°C] | 30 | 30 | 30 | 2500 |
| Number of NCO group | 2.9 | 2.9 | 2.9 | 2.9 |
| Decreasing degree of viscosity | A | A | A | C |
| Water dispersibility | A | B | A | C |
| Drying property | A | A | A | A |
| Water-resistance | A | B | A | A |
| Wet-adhesion resistance | A | B | A | C |
| Dispersibility in primary component | A | B | A | C |

Table 7

| | Example 1-23 | Example 1-24 | Comparative Example 1-3 |
|---|---|---|---|
| Starting isocyanate | LTI | GTI | HDI nurate |
| Hydrophilic compound | MPG-130 | MPG-130 | MPG-130 |
| Average number of repeating unit y of alkylene glycol | 9 | 9 | 9 |
| Modification degree of polyalkylene glycol alkyl ether [% by mol] | 5.0 | 5.8 | 10.2 |
| Content of polyalkylene glycol alkyl ether [% by mass] | 20 | 20 | 20 |
| Blocking agent | DMP | DMP | DMP |
| Viscosity [mPa·s/25°C] | 240 | 720 | 3400 |
| Effective NCO content [wt%] | 11.9 | 11.7 | 9.3 |
| Number of NCO group | 2.9 | 2.9 | 2.9 |
| Decreasing degree of viscosity | A | A | C |
| Water dispersibility | A | A | C |
| Drying property | B | B | B |
| Water-resistance | A | B | A |

(Example 1-25) (not according to the invention)

An isocyanate composition was obtained by the same procedure as that of Example 1-1 except that 0.03 g of 2,2,4-trimethylpentane and 1.0 g of water were added to 300 g of LTI.

Each evaluation results of the isocyanate composition were the same as those of Example 1-1.

(Example 1-26) (not according to the invention)

An isocyanate composition was obtained by the same procedure as that of Example 1-1 except that 0.03 g of hexadecane and 1.0 g of water were added to 300 g of LTI.

Each evaluation results of the isocyanate composition were the same as those of Example 1-1.

(Preparation Example 9)

20 g of LTI was charged in a four-necked flask equipped with a stirrer, a thermometer, a reflux condenser, and a nitrogen inlet tube under nitrogen atmosphere, heated at 60°C, and 7.2 g of methanol was added thereto, followed by stirring the mixture for 4 hours to obtain a N-substituted carbamic ester C-1.

(Example 1-27) (not according to the invention)

An isocyanate composition was obtained by the same way as that of Example 1-1, except that 0.03 g of N-substituted carbamic ester C-1 and 1.0 g of water were added to 300 g of LTI.

Each evaluation results of the isocyanate composition were the same as those of Example 1-1.

As shown by the results, the isocyanate compositions of examples according to the present invention realized low viscosity, water dispersibility, drying property, water-resistance, wet-adhesion resistance, and dispersibility into the primary component.

(Example 2-1) (not according to the invention)

25.7 parts by mass of polyethylene glycol monomethyl ether in which the average number of ethylene glycol repeating units was 4.2 (manufactured by NIPPON NYUKAZAI CO., LTD., under the trade name of "MPG") and 10.3 parts by mass of polyethylene glycol monomethyl ether in which the average number of ethylene glycol repeating units was 9.0 (manufactured by NIPPON NYUKAZAI CO., LTD., under the trade name of "MPG-130") were added to 64.0 parts by mass of NTI and 0.01 parts by mass of 2-ethylhexyl acid phosphate (manufactured by JOHOKU CHEMICAL CO., LTD., under the trade name of "JP-508T"), such that the average number of ethylene glycol repeating units became 5.0, followed by stirring the mixture at 100°C for 4 hours under nitrogen atmosphere to allow the reaction to proceed. After the reaction ended, an isocyanate composition was obtained. The modification degree of the obtained composition was 15.8% by mol, and the average number of ethylene glycol repeating units detected by NMR was 5.0. Thus, the content of polyethylene glycol monomethyl ether was calculated to be 36% by mass. The results of decreasing degree of viscosity, water dispersibility, and external appearance and water-resistance of a resultant coating film are shown in Table 8.

(Example 2-2) (not according to the invention)

13.8 parts by mass of polyethylene glycol monomethyl ether in which the average number of ethylene glycol repeating units was 4.2 (manufactured by NIPPON NYUKAZAI CO., LTD., under the trade name of "MPG") and 16.2 parts by mass of polyethylene glycol monomethyl ether in which the average number of ethylene glycol repeating units was 9.0 (manufactured by NIPPON NYUKAZAI CO., LTD., under the trade name of "MPG-130") were added to 70.0 parts by mass of NTI and 0.01 parts by mass of 2-ethylhexyl acid phosphate (manufactured by JOHOKU CHEMICAL CO., LTD., under the trade name of "JP-508T"), such that the average number of ethylene glycol repeating units became 6.0, followed by stirring the mixture at 100°C for 4 hours under nitrogen atmosphere to allow the reaction to proceed. After the reaction ended, an isocyanate composition was obtained. The evaluation results are shown in Table 8.

(Example 2-3) (not according to the invention)

20.0 parts by mass of polyethylene glycol monomethyl ether in which the average number of ethylene glycol repeating units was 9.0 (manufactured by NIPPON NYUKAZAI CO., LTD., under the trade name of "MPG-130") were added to 85.0 parts by mass of NTI and 0.01 parts by mass of 2-ethylhexyl acid phosphate (manufactured by JOHOKU CHEMICAL CO., LTD., under the trade name of "JP-508T"), followed by stirring the mixture at 100°C for 4 hours under nitrogen atmosphere to allow the reaction to proceed. After the reaction ended, an isocyanate composition was obtained. The evaluation results are shown in Table 8.

(Example 2-4) (not according to the invention)

15.0 parts by mass of polyethylene glycol monomethyl ether having a number average molecular weight of 550 (manufactured by NOF CORPORATION, under the trade name of "M550" in which the average number of ethylene glycol repeating units was 11.8) were added to 85.0 parts by mass of NTI and 0.01 parts by mass of 2-ethylhexyl acid phosphate (manufactured by JOHOKU CHEMICAL CO., LTD., under the trade name of "JP-508T"), followed by stirring the mixture at 100°C for 4 hours under nitrogen atmosphere to allow the reaction to proceed. After the reaction ended, an isocyanate composition was obtained. The evaluation results are shown in Table 8.

(Example 2-5) (not according to the invention)

8.0 parts by mass of polyethylene glycol monomethyl ether in which the average number of ethylene glycol repeating units was 15.0 (manufactured by NIPPON NYUKAZAI CO., LTD., under the trade name of "MPG-081") were added to 92.0 parts by mass of NTI and 0.01 parts by mass of 2-ethylhexyl acid phosphate (manufactured by JOHOKU CHEMICAL CO., LTD., under the trade name of "JP-508T"), followed by stirring the mixture at 100°C for 4 hours under nitrogen atmosphere to allow the reaction to proceed. After the reaction ended, an isocyanate composition was obtained. The evaluation results are shown in Table 9.

(Example 2-6) (not according to the invention)

5.0 parts by mass of polyethylene glycol monomethyl ether having a number average molecular weight of 750 (manufactured by The Dow Chemical Company, under the trade name of "750" in which the average number of ethylene glycol repeating units was 16.3) were added to 95.0 parts by mass of NTI and 0.01 parts by mass of 2-ethylhexyl acid phosphate

phosphate (manufactured by JOHOKU CHEMICAL CO., LTD., under the trade name of "JP-508T"), followed by stirring the mixture at 100°C for 4 hours under nitrogen atmosphere to allow the reaction to proceed. After the reaction ended, an isocyanate composition was obtained. The evaluation results are shown in Table 9.

(Example 2-7) (not according to the invention)

30.0 parts by mass of polyethylene glycol monomethyl ether in which the average number of ethylene glycol repeating units was 9.0 (manufactured by NIPPON NYUKAZAI CO., LTD., under the trade name of "MPG-130") were added to 70.0 parts by mass of NTI and 0.01 parts by mass of 2-ethylhexyl acid phosphate (manufactured by JOHOKU CHEMICAL CO., LTD., under the trade name of "JP-508T"), followed by stirring the mixture at 100°C for 4 hours under nitrogen atmosphere to allow the reaction to proceed. After the reaction ended, an isocyanate composition was obtained. The evaluation results are shown in Table 9.

(Example 2-8) (not according to the invention)

8.0 parts by mass of polyethylene glycol monomethyl ether in which the average number of ethylene glycol repeating units was 9.0 (manufactured by NIPPON NYUKAZAI CO., LTD., under the trade name of "MPG-130") were added to 92.0 parts by mass of NTI and 0.01 parts by mass of 2-ethylhexyl acid phosphate (manufactured by JOHOKU CHEMICAL CO., LTD., under the trade name of "JP-508T"), followed by stirring the mixture at 100°C for 4 hours under nitrogen atmosphere to allow the reaction to proceed. After the reaction ended, an isocyanate composition was obtained. The evaluation results are shown in Table 9.

(Example 2-9) (not according to the invention)

An isocyanate composition was obtained by the same way as that of Example 2-3, except that 2-ethylhexyl acid phosphate (manufactured by JOHOKU CHEMICAL CO., LTD., under the trade name of "JP-508T") was not added. The evaluation results are shown in Table 10.

(Example 2-10) (not according to the invention)

An isocyanate composition was obtained by the same way as that of Example 2-3, except that LTI was used as a starting isocyanate. The evaluation results are shown in Table 10.

(Example 2-11) (not according to the invention)

20 g of monobutyl phosphate and 13.0 g of trimethylamine were mixed to neutralize a part of the monobutyl phosphate. 33.0 parts by mass of the resultant mixture of monobutyl phosphate and trimethylamine were added to 1000 parts by mass of NTI, followed by stirring the mixture under nitrogen atmosphere at 90°C for 4 hours to allow the reaction to proceed. After the reaction ended, an isocyanate composition was obtained. The following measurements were conducted by the same way as that of Example 2-1. The phosphorus atom content detected by ICP-AES was 0.38% by mass. The evaluation results are shown in Table 10.

(Example 2-12) (not according to the invention)

10 g of monobutyl phosphate and 6.5 g of triethylamine were mixed to neutralize a part of the monobutyl phosphate. 100 parts by mass of polyethylene glycol monomethyl ether in which the average number of ethylene glycol repeating units was 9.0 (manufactured by NIPPON NYUKAZAI CO., LTD., under the trade name of "MPG-130") and 16.5 parts by mass of the resultant mixture of monobutyl phosphate and triethylamine were added to 1000 parts by mass of NTI, followed by stirring the mixture under nitrogen atmosphere at 90°C for 4 hours to allow the reaction to proceed. After the reaction ended, an isocyanate composition was obtained. The following measurements were conducted by the same way as that of Example 2-11. The evaluation results are shown in Table 11.

(Example 2-13) (not according to the invention)

6.1 parts by mass of 3-cyclohexylaminopropane sulfonic acid and 3.5 parts by mass of N,N-dimethylcyclohexylamine were added to 1000 parts by mass of NTI, followed by stirring the mixture under nitrogen atmosphere at 100°C for 5 hours to allow the reaction to proceed. After the reaction ended, an isocyanate composition was obtained. The following measurements were conducted by the same way as that of Example 2-1. The phosphorus atom content

detected by ion chromatography was 0.11% by mass. The evaluation results are shown in Table 11.

(Example 2-14) (not according to the invention)

12.5 parts by mass of triethylamine 2-hydroxyethanesulfonate (amine sulfonate 1) obtained in Preparation Example 5, 200 parts by mass of acetone, and 0.05 parts by mass of dibutyltin dilaurate were added to 1000 parts by mass of NTI, followed by stirring the mixture at 70°C for 5 hours while conducting reflux under nitrogen atmosphere to allow the reaction to proceed. Thereafter, a reflux apparatus was removed, and then the resultant was stirred at 100°C for 0.5 hours to maintain the reaction. After the reaction ended, an isocyanate composition was obtained. The following measurements were conducted by the same way as Example 2-13. Evaluation results are shown in Table 11.

(Example 2-15) (not according to the invention)

27.7 parts by mass of N,N-diisopropylethylamine 2-hydroxyethanesulfonate (amine sulfonate 2) obtained in Preparation Example 6, 200 parts by mass of acetone, and 0.05 parts by mass of dibutyltin dilaurate were added to 1000 parts by mass of NTI, followed by stirring the mixture at 70°C for 5 hours while conducting reflux under nitrogen atmosphere to allow the reaction to proceed. Thereafter, a reflux apparatus was removed, and then the resultant was stirred at 100°C for 0.5 hours to maintain the reaction. After the reaction ended, an isocyanate composition was obtained. The following measurements were conducted by the same way as Example 2-13. The evaluation results are shown in Table 12.

(Example 2-16) (not according to the invention)

The HDI polyisocyanate described in Preparation Example 4 was mixed with the isocyanate composition described in Example 2-3 at a mass ratio of 90/10. The evaluation results are shown in Table 12.

(Comparative Example 2-1)

An isocyanate composition was obtained by the same way as that of Example 2-3, except that the HDI polyisocyanate prepared in Preparation Example 4 was used instead of NTI. The following measurements were conducted by the same way as Example 2-13. The evaluation results are shown in Table 12.

(Example 2-22) (not according to the invention)

20.0 parts by mass of polyethylene glycol monomethyl ether having a number average molecular weight of 1000 (manufactured by NOF CORPORATION, under the trade name of "M1000" in which the average number of ethylene glycol repeating units was 22.0) were added to 80.0 parts by mass of NTI, followed by stirring the mixture under nitrogen atmosphere at 100°C for 4 hours to allow the reaction to proceed. After the reaction ended, an isocyanate composition was obtained. The evaluation results are shown in Table 12.

(Example 2-17) (not according to the invention)

91.6 parts by mass (resin solid content: 70% by mass) of dipropylene glycol dimethyl ether was added to 100 parts by mass of the isocyanate composition prepared in Example 2-3, and then the mixture was heated at 70°C. Then, 113.8 parts by mass of 3,5-dimethylpyrazole (1.03 molar times relative to NCO) was added to the resultant while conducting stirring, followed by stirring the mixture at 70°C for 1 hour to obtain a blocked isocyanate composition. The evaluation results of the obtained blocked isocyanate composition are shown in Table 13. In Table 13, the term "DMP" means 3,5-dimethylpyrazole.

(Example 2-18) (not according to the invention)

A blocked isocyanate composition was obtained by the same way as Example 2-17, except that the isocyanate composition was replaced with the isocyanate composition prepared in Example 2-10. The evaluation results are shown in Table 13.

(Comparative Example 2-3)

A blocked isocyanate composition was obtained by the same way as Example 2-17, except that the isocyanate

composition was replaced with the isocyanate composition prepared in Comparative Example 2-1. The evaluation results are shown in Table 13.

(Example 2-23) (not according to the invention)

A blocked isocyanate composition was obtained by the same way as Example 2-17, except that the isocyanate composition was replaced with the isocyanate composition prepared in Example 2-22. The evaluation results are shown in Table 13.

Table 8

| | Example 2-1 | Example 2-2 | Example 2-3 | Example 2-4 |
|---|---|---|---|---|
| Starting isocyanate | NTI | NTI | NTI | NTI |
| Hydrophilic compound | MPG<br>MPG-130 | MPG<br>MPG-130 | MPG-130 | M550 |
| Average number of repeating unit y of alkylene glycol | 5 | 6 | 9 | 11.8 |
| Modification degree of polyalkylene glycol alkyl ether [% by mol] | 15.8 | 10.8 | 3.3 | 3.7 |
| Content of polyalkylene glycol alkyl ether [% by mass] | 36 | 30 | 15 | 15 |
| Phosphorus atom content [% by mass] | 0.0012 | 0.0012 | 0.0012 | 0.0012 |
| Sulfur atom content [% by mass] | - | - | - | - |
| NCO content [wt%] | 42.1 | 44.6 | 48.3 | 48.2 |
| Number of NCO group | 2.5 | 2.7 | 2.9 | 2.9 |
| Decreasing degree of viscosity | A | A | A | A |
| Water dispersibility | B | A | A | A |
| External appearance of coating film | A | A | A | A |
| Water-resistance | B | B | A | A |

Table 9

| | Example 2-5 | Example 2-6 | Example 2-7 | Example 2-8 |
|---|---|---|---|---|
| Starting isocyanate | NTI | NTI | NTI | NTI |
| Hydrophilic compound | MPG-081 | 750 | MPG-130 | MPG-130 |
| Average number of repeating unit y of alkylene glycol | 15 | 16.3 | 9 | 9 |
| Modification degree of polyalkylene glycol alkyl ether [% by mol] | 1.1 | 0.6 | 7.8 | 1.7 |
| Content of polyalkylene glycol alkyl ether [% by mass] | 8 | 5 | 30 | 8 |
| Phosphorus atom content [% by mass] | 0.0012 | 0.0012 | 0.0012 | 0.0012 |
| Sulfur atom content [% by mass] | - | - | - | - |
| NCO content [wt%] | 45.6 | 49.7 | 46.1 | 49.2 |
| Number of NCO group | 2.8 | 2.9 | 2.8 | 2.9 |
| Decreasing degree of viscosity | A | A | A | A |
| Water dispersibility | B | B | A | A |
| External appearance of coating film | B | B | A | B |
| Water-resistance | A | B | B | A |

Table 10

| | Example 2-9 | Example 2-10 | Example 2-11 |
|---|---|---|---|
| Starting isocyanate | NTI | LTI | NTI |
| Hydrophilic compound | MPG-130 | MPG-130 | Triethylamine monobutyl phosphate |
| Average number of repeating unit y of alkylene glycol | 9 | 9 | - |
| Modification degree of polyalkylene glycol alkyl ether [% by mol] | 3.3 | 3.4 | - |
| Content of polyalkylene glycol alkyl ether [% by mass] | 15 | 15 | - |
| Phosphorus atom content [% by mass] | - | 0.0012 | 0.36 |
| Sulfur atom content [% by mass] | - | - | - |
| NCO content [wt%] | 48.4 | 48.3 | 42.7 |
| Number of NCO group | 2.9 | 2.9 | 2.9 |
| Decreasing degree of viscosity | A | A | A |
| Water dispersibility | B | B | A |
| External appearance of coating film | A | A | A |
| Water-resistance | A | A | A |

Table 11

| | Example 2-12 | Example 2-13 | Example 2-14 |
|---|---|---|---|
| Starting isocyanate | NTI | NTI | NTI |
| Hydrophilic compound | Triethylamine monobutyl phosphate MPG-130 | 3-cyclohexyl aminopropane sulfonic acid | Amine sulfonate 1 |
| Average number of repeating unit y of alkylene glycol | 9 | - | - |
| Modification degree of polyalkylene glycol alkyl ether [% by mol] | 1.9 | - | - |
| Content of polyalkylene glycol alkyl ether [% by mass] | 10 | - | - |
| Phosphorus atom content [% by mass] | 0.19 | - | - |
| Sulfur atom content [% by mass] | - | 0.11 | 0.21 |
| NCO content [wt%] | 45.6 | 44.0 | 40.4 |
| Number of NCO group | 2.9 | 2.9 | 2.9 |
| Decreasing degree of viscosity | A | A | A |
| Water dispersibility | A | A | A |
| External appearance of coating film | B | B | A |
| Water-resistance | A | A | A |

Table 12

| | Example 2-15 | Example 2-16 | Comparative Example 2-1 | Example 2-22 |
|---|---|---|---|---|
| Starting isocyanate | NTI | Example 2-3／HDI polyisocyanate = 90/10 (mass ratio) | HDI poly-isocyanate | NTI |
| Hydrophilic compound | Amine sulfonate 2 | | MPG-130 | M1000 |
| Average number of repeating unit y of alkylene glycol | - | | 9 | 22 |
| Modification degree of polyalkylene glycol alkyl ether [% by mol] | - | | 7.0 | 2.1 |
| Content of polyalkylene glycol alkyl ether [% by mass] | - | | 15 | 20 |
| Phosphorus atom content [% by mass] | - | | 0.0012 | - |
| Sulfur atom content [% by mass] | 0.36 | | - | - |
| NCO content [wt%] | 47.1 | | 16.4 | 49.0 |
| Number of NCO group | 3.0 | 3.0 | 2.7 | 2.9 |
| Decreasing degree of viscosity | A | A | C | A |
| Water dispersibility | A | A | C | B |
| External appearance of coating film | A | A | C | C |
| Water-resistance | A | A | A | B |

Table 13

| | Example 2-17 | Example 2-18 | Comparative Example 2-3 | Example 2-23 |
|---|---|---|---|---|
| Starting isocyanate | NTI | LTI | HDI poly-isocyanate | NTI |
| Hydrophilic compound | MPG-130 | MPG-130 | MPG-130 | M1000 |
| Average number of repeating unit y of alkylene glycol | 9 | 9 | 9 | 22 |
| Modification degree of polyalkylene glycol alkyl ether [% by mol] | 3.3 | 3.4 | 7.0 | 2.1 |
| Content of polyalkylene glycol alkyl ether [% by mass] | 15 | 15 | 15 | 20 |
| Blocking agent | DMP | DMP | DMP | DMP |
| Effecitve NCO content [wt%] | 12.0 | 12.0 | 9.5 | 12.3 |
| Number of NCO group | 2.9 | 2.9 | 2.9 | 2.9 |
| Decreasing degree of viscosity | A | A | C | A |
| Water dispersibility | A | A | C | B |
| External appearance of coating film | A | A | C | C |
| Water-resistance | A | B | A | B |

(Example 2-19) (not according to the invention)

An isocyanate composition was obtained by the same way as Example 2-1, except that 0.03 g of 2,2,4-trimethylpentane was added to 300 g of NTI.
Each evaluation results of the isocyanate composition were the same as those of Example 2-1.

(Example 2-20) (not according to the invention)

An isocyanate composition was obtained by the same way as Example 2-1, except that 0.03 g of hexadecane was added to 300 g of NTI.
Each evaluation results of the isocyanate composition were the same as those of Example 2-1.

(Preparation Example 10)

20 g of NTI was charged into a four-necked flask equipped with a stirrer, a thermometer, a reflux condenser, and a nitrogen inlet tube, under nitrogen atmosphere, and then heated at 60°C, followed by adding 7.7 g of methanol thereto, and then stirring the mixture for 4 hours to obtain a N-substituted carbamic ester C-2.

(Example 2-21) (not according to the invention)

An isocyanate composition was obtained by the same way as Example 2-1, except that 0.03 g of the N-substituted carbamic ester C-2 was added to 300 g of NTI.
Each evaluation results of the isocyanate composition were the same as those of Example 2-1.

(Example 3-1)

40 g of ion-exchanged water was put into a beaker, and then 10 g of NIT was added dropwise thereto while conducting stirring at a rate of 1000 rpm using a disper having a diameter of 4 cm, followed by mixing the mixture at

23°C for 3 minutes to obtain an aqueous dispersion of isocyanate composition.

The water-dispersion stability of the aqueous dispersion was evaluated as A, the average dispersion particle diameter thereof was 5450 nm, the drying property thereof was evaluated as A, the usable time of the coating material was evaluated as A, and the water-resistance of a coating film of the aqueous dispersion was evaluated as A.

(Examples 3-2 to 3-6, Comparative Examples 3-1 to 3-3)

The same procedures were conducted as those of Example 3-1, except that the kind and added amount of isocyanate, and the kind and added amount of an organic solvent were adopted as shown in Table 14. The viscosity of isocyanate compositions, and the evaluation results of the water-dispersion stability, the average dispersion particle diameter, and the drying property of resultant aqueous dispersions of isocyanate compositions, the usable time of the resultant coating materials, and the water-resistance of coating films formed by the aqueous dispersions are shown in Table 14.

Since separation within 1 hour after dispersion in water was confirmed in Comparative Examples 3-1 to 3-3, the water-dispersion stability was evaluated as B, and the average dispersion particle diameter could not be measured. The upper layer liquid of the aqueous dispersion was used to evaluate the drying property, the usable time of coating material, and the water-resistance of coating film formed by the aqueous dispersion. The results are shown in Table 14.

(Comparative Example 3-4)

10 g of NTI was put in a test tube, and then 40 g of ion-exchanged water was carefully added thereto such that NTI was covered therewith, followed by putting a stopper on the tube. Then, the resultant was agitated vigorously for several seconds so as to obtain a milky suspension, and thus an aqueous dispersion of isocyanate composition was obtained.

The aqueous dispersion was separated into an isocyanate composition and water after several tens of seconds, and precipitated, the water-dispersion stability was evaluated as B, and the average dispersion particle diameter could not be measured. The upper layer liquid of the aqueous dispersion was used to evaluate the drying property, the usable time of a coating material, and the water-resistance of a coating film formed by the aqueous dispersion. The results are shown in Table 14.

Table 14

| | | | Example 3-1 | Example 3-2 | Example 3-3 | Example 3-4 | Example 3-5 | Example 3-6 |
|---|---|---|---|---|---|---|---|---|
| Isocyanate composition | Isocyanate | Kind | NTI | NTI | LTI | LTI | P-1 | P-4 |
| | | Addition amount [g] | 10 | 10 | 10 | 10 | 10 | 10 |
| | Organic solvent | Kind | - | BGA | - | BGA | - | - |
| | | Addition amount [g] | - | 1 | - | 1 | - | - |
| | Viscosity [mPa·s/25°C] | | 8 | 7 | 25 | 22 | 27 | 30 |
| | Content of moiety derived from hydrophilic group-containing compound [% by mass] | | 0 | 0 | 0 | 0 | 0 | 1 |
| Dispersion stability in water | | | A | A | A | A | A | A |
| Dispersion particle diameter [nm] | | | 5,450 | 5,400 | 5,680 | 5,500 | 470 | 450 |
| Evaluation of drying property | | | A | A | A | A | A | A |
| Evaluation of usable time of coating material | | | A | B | A | B | A | A |
| Evaluation of water-resistance of coating film | | | A | A | A | A | A | A |

| | | | Comparative Example 3-1 | Comparative Example 3-2 | Comparative Example 3-3 | Comparative Example 3-4 |
|---|---|---|---|---|---|---|
| Isocyanate composition | Isocyanate | Kind | HDI | HDI | P-2 | NTI |
| | | Addition amount [g] | 10 | 10 | 10 | 10 |
| | Organic solvent | Kind | - | BGA | - | - |
| | | Addition amount [g] | - | 1 | - | - |
| | Viscosity [mPa·s/25°C] | | 2 | 4 | 15 | 8 |
| | Content of moiety derived from hydrophilic group-containing compound [% by mass] | | 0 | 0 | 0 | 0 |
| Dispersion stability in water | | | B | B | B | B |
| Dispersion particle diameter [nm] | | | Unmeasurable | Unmeasurable | Unmeasurable | Unmeasurable |
| Evaluation of drying property | | | B | B | B | B |
| Evaluation of usable time of coating material | | | A | B | A | C |
| Evaluation of water-resistance of coating film | | | B | B | B | B |

(Example 3-7)

0.03 g of 2,2,4-trimethylpentane was added to 300 g of NTI to obtain an isocyanate composition. The isocyanate composition was subjected to the same procedures as those of Example 3-1 to obtain an aqueous dispersion.

The water-dispersion stability of the aqueous dispersion was evaluated as A, the average dispersion particle diameter was 5450 nm, the drying property was evaluated as A, the usable time of a coating material was evaluated as A, and the water-resistance of a coating film formed by the aqueous dispersion was evaluated as A.

(Example 3-8)

0.03 g of hexadecane was added to 300 g of NTI to obtain an isocyanate composition. The isocyanate composition was subjected to the same procedures as those of Example 3-1 to obtain an aqueous dispersion.

The water-dispersion stability of the aqueous dispersion was evaluated as A, the average dispersion particle diameter was 5450 nm, the drying property was evaluated as A, the usable time of a coating material was evaluated as A, and the water-resistance of a coating film formed by the aqueous dispersion was evaluated as A.

(Example 3-9)

0.03 g of N-substituted carbamic ester C-2 prepared in Preparation Example 10 was added to 300 g of NTI to

obtain an isocyanate composition. The isocyanate composition was subjected to the same procedures as those of Example 3-1 to obtain an aqueous dispersion.

The water-dispersion stability of the aqueous dispersion was evaluated as A, the average dispersion particle diameter was 5450 nm, the drying property was evaluated as A, the usable time of a coating material was evaluated as A, and the water-resistance of a coating film formed by the aqueous dispersion was evaluated as A.

It was confirmed as shown above that the isocyanate compositions prepared in Examples 3-1 to 3-9 were excellent in dispersion stability in water, quick-drying property and usable time when made into a coating composition, and the coating films formed thereby were excellent in water-resistance.

(Example 4-1)

40 g of ion-exchanged water was put in a beaker, and then 10 g of LTI was added dropwise thereto while conducting stirring at 1000 rpm using a disper having a diameter of 4 cm, followed by mixing the mixture at 23°C for 3 minutes to obtain an aqueous dispersion of isocyanate composition.

The water-dispersion stability, the dispersion particle diameter, and the drying property of the aqueous dispersion, and, the water-resistance of coating film formed by the aqueous dispersion are shown in Table 15.

(Examples 4-2, 4-3)

40 g of ion-exchanged water was put in a beaker, and then 11 g of 2-n-butoxyethyl acetate (BGA) solution containing isocyanate shown in Table 15 in a solid content of 90% by mass was added dropwise thereto while conducting stirring at 1000 rpm using a disper having a diameter of 4 cm, followed by mixing the mixture at 23°C for 3 minutes to obtain an aqueous dispersion of isocyanate composition.

The water-dispersion stability, the dispersion particle diameter, and the drying property of the aqueous dispersion, and, the water-resistance of coating film formed by the aqueous dispersion are shown in Table 15.

(Example 4-4)

40 g of ion-exchanged water was put in a beaker, and then 10 g of LTI was added dropwise thereto while conducting stirring at 1000 rpm using a disper having a diameter of 4 cm, followed by mixing the mixture at 23°C for 3 minutes to obtain an aqueous dispersion of isocyanate composition.

The water-dispersion stability, the dispersion particle diameter, and the drying property of the aqueous dispersion, and, the water-resistance of coating film formed by the aqueous dispersion are shown in Table 15.

(Comparative Examples 4-1, 4-2)

Mixture was conducted by the same way as that of Examples 4-1 and 4-2, except that HD1 (hexamethylene diisocyanate) was used instead of LTI. Since separations of the resultants were confirmed within 1 hour after water-dispersion, the average dispersion particle diameters could not be measured. The upper layer liquids of the aqueous dispersions were used to evaluate the drying property thereof, and the water-resistance of coating films formed by the aqueous dispersions. The evaluation results are shown in Table 15.

(Comparative Example 4-3)

10 g of LTI was put in a test tube, and then 40 g of ion-exchanged water was carefully added thereto such that LTI was covered therewith, followed by putting a stopper on the test tube. Then, the resultant was agitated vigorously for 10 seconds so as to obtain a milky suspension. After several ten seconds, the resultant isocyanate composition was separated and precipitated without dispersing in water, and therefore the average dispersion particle diameter could not be measured. The upper layer liquid of the mixture of water and the isocyanate composition was used to evaluate the drying property thereof and the water-resistance of a coating film formed by the aqueous dispersion. The evaluation results are shown in Table 15.

Table 15

| | | Example 4-1 | Example 4-2 | Example 4-3 | Example 4-4 | Comprative Example 4-1 | Comprative Example 4-2 | Comprative Example 4-3 |
|---|---|---|---|---|---|---|---|---|
| Isocyanate | Kind | LTI | LTI | GTI | LTI | HDI | HDI | LTI |
| | Addition amount [g] | 10 | 10 | 10 | 10 | 10 | 10 | 10 |
| Organic solvent | Kind | - | BGA | BGA | - | - | BGA | - |
| | Addition amount [g] | - | 1 | 1 | - | - | 1 | - |
| Viscosity [mPa·s/25°C] | | 25 | 22 | 40 | 28 | - | - | - |
| Hydrophilic group-containing compound [% by mass] | | 0 | 0 | 0 | 1 | 0 | 0 | 0 |
| Dispersion stability in water | | A | A | A | A | B | B | B |
| Dispersion particle diameter [nm] | | 5680 | 5500 | 6200 | 1000 | un-measurable | un-measurable | un-measurable |
| Drying property | | A | A | A | A | B | B | B |
| Water-resistance of coating film | | A | A | A | A | B | B | B |

(Example 4-5)

0.03 g of 2,2,4-trimethylpentane was added to 300 g of LTI to obtain an isocyanate composition. The isocyanate composition was used to obtain an aqueous dispersion by the same way as that of Example 4-1.

The evaluation results of the aqueous dispersion were the same as those of Example 4-1.

(Example 4-6)

0.03 g of hexadecane was added to 300 g of LTI to obtain an isocyanate composition. The isocyanate composition was used to obtain an aqueous dispersion by the same way as that of Example 4-1.

The evaluation results of the aqueous dispersion were the same as those of Example 4-1.

(Example 4-7)

0.03 g of N-substituted carbamic ester C-1 prepared in Preparation Example 9 was added to 300 g of LTI to obtain an isocyanate composition. The isocyanate composition was used to obtain an aqueous dispersion by the same way as that of Example 4-1.

The evaluation results of the aqueous dispersion were the same as those of Example 4-1.

It was confirmed as shown above that the isocyanate compositions prepared in Examples 4-1 to 4-7 were excellent in dispersion stability in water, quick-drying property and usable time when made into a coating composition, and the coating films formed thereby were excellent in water-resistance.

INDUSTRIAL APPLICABILITY

The aqueous dispersion of isocyanate composition was excellent in dispersion stability in water and is favorably used as a coating composition that is excellent in drying property and that can form a coating film excellent in water-resistance.

## Claims

1. An aqueous dispersion of an isocyanate composition comprising: water; and the isocyanate composition dispersed in the water,

   wherein the isocyanate composition comprises at least one selected from the group consisting of a triisocyanate compound of the general formula (IV) and a diisocyanate compound of general formula (V), and

the isocyanate composition has a volumne-average dispersion particle diameter of 200 nm to 8000 nm as determined in <Average dispersion particle diameter> in the description,

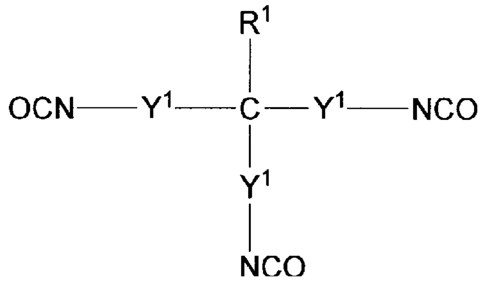

(IV)

in the general formula (IV), a plurality of $Y^1$s each independently represent a single bond or a divalent C1-20 hydrocarbon group which may have at least one selected from the group consisting of an ester structure and an ether structure, the plurality of Y's is identical to or different from each other, and $R^1$ represents a hydrogen atom or a monovalent C1-12 hydrocarbon group,

**$OCN-Y^2-NCO$** (V)

in the general formula (V), $Y^2$ represents a divalent C1-20 hydrocarbon group having an ester structure.

2. The aqueous dispersion of the isocyanate composition according to claim 1, wherein the isocyanate composition comprises the triisocyanate compound of the general formula (IV), and at least one of the plurality of $Y^1$s has an ester structure.

3. The aqueous dispersion of the isocyanate composition according to claim 1 or 2, wherein a hydrophilic group is added to a part of isocyanate groups of the triisocyanate compound of the general formula (IV) or the diisocyanate compound of the general formula (V), and a content of the hydrophilic group relative to a total amount of the isocyanate composition is 0.5% by mass to 5% by mass.

4. The aqueous dispersion of the isocyanate composition according to any one of claims 1 to 3, wherein the isocyanate composition further comprises a polyisocyanate compound having an allophanate structure of general formula (VI):

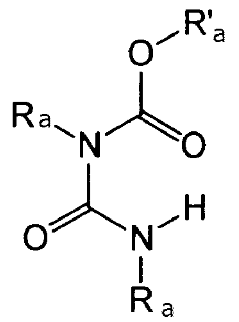

(VI)

in the general formula (VI), Ra represents an organic group, at least one of a plurality of Ra represents a group of general formula (VII), the plurality of Ra is identical to or different from each other, R'a represents a residual group obtained by removing one hydroxyl group from a monovalent or more-valent alcohol,

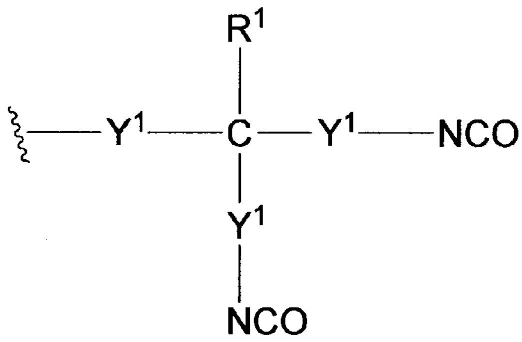

(VII)

in the general formula (VII), a plurality of $Y^1$s each independently represent a single bond, or a divalent C1-20 hydrocarbon group which may have at least one selected from the group consisting of an ester structure and an ether structure, the plurality of Y's is identical to or different from each other, at least one of the plurality of $Y^1$s has an ester structure, $R^1$ represents a hydrogen atom or a monovalent C1-12 hydrocarbon group, and a wavy line represents a binding site.

**5.** The aqueous dispersion of the isocyanate composition according to any one of claims 1 to 4, further comprising an organic solvent.

**6.** The aqueous dispersion of the isocyanate composition according to claim 5, wherein an aqueous solubility of the organic solvent at 20°C is 5% by mass or more.

**7.** The aqueous dispersion of the isocyanate composition according to any one of claims 1 to 6, wherein the isocyanate composition further comprises a polyisocyanate obtained by polymerizing diisocyanates having an aliphatic, alicyclic, or aromatic isocyanate group.

**8.** A production method of an aqueous dispersion of an isocyanate composition of any one of claims 1 to 7, comprising a step in which an isocyanate composition is added dropwise into water while conducting stirring using a stirring blade.

**9.** A coating composition comprising an aqueous dispersion of isocyanate composition of any one of claims 1 to 7, and a polyol.

**10.** A coating film formed by curing a coating composition of claim 9.

**Patentansprüche**

**1.** Wässrige Dispersion einer Isocyanatzusammensetzung, umfassend: Wasser und die in dem Wasser dispergierte Isocyanatzusammensetzung,

wobei die Isocyanatzusammensetzung mindestens eine Verbindung umfasst, ausgewählt der Gruppe bestehend aus einer Triisocyanatverbindung der allgemeinen Formel (IV) und einer Diisocyanatverbindung der allgemeinen Formel (V), und
die Isocyanatzusammensetzung einen volumengemittelten Dispersions-Teilchendurchmesser von 200 nm bis 8000 nm, bestimmt wie in "<Average dispersion particle diameter>" in der Beschreibung beschrieben, aufweist,

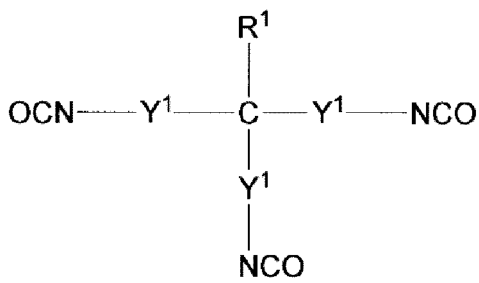

(IV)

wobei in der allgemeinen Formel (IV) mehrere $Y^1$ jeweils unabhängig voneinander eine Einfachbindung oder eine zweibindige C1-20-Kohlenwasserstoffgruppe, welche mindestens eine, ausgewählt aus der Gruppe bestehend aus einer Esterstruktur und einer Etherstruktur, aufweisen kann, darstellen, wobei die mehreren $Y^1$ identisch oder verschieden voneinander sind, und $R^1$ ein Wasserstoffatom oder eine einbindige C1-12-Kohlenwasserstoffgruppe darstellt,

**OCN-$Y^2$-NCO** (V)

wobei $Y^2$ in der allgemeinen Formel (V) eine zweibindige C1-20-Kohlenwasserstoffgruppe mit einer Esterstruktur darstellt.

**2.** Wässrige Dispersion der Isocyanatzusammensetzung nach Anspruch 1, wobei die Isocyanatzusammensetzung die Triisocyanatverbindung der allgemeinen Formel (IV) umfasst und mindestens eines der mehreren $Y^1$ eine Esterstruktur aufweist.

**3.** Wässrige Dispersion der Isocyanatzusammensetzung nach Anspruch 1 oder 2, wobei eine hydrophile Gruppe an einen Teil der Isocyanatgruppen der Triisocyanatverbindung der allgemeinen Formel (IV) oder der Diisocyanatverbindung der allgemeinen Formel (V) angefügt ist und der Gehalt der hydrophilen Gruppe, bezogen auf die Gesamtmenge der Isocyanatzusammensetzung, 0,5 Massen-% bis 5 Massen-% ist.

**4.** Wässrige Dispersion der Isocyanatzusammensetzung nach einem der Ansprüche 1 bis 3, wobei die Isocyanatzusammensetzung weiterhin eine Polyisocyanatverbindung mit einer Allophanatstruktur der allgemeinen Formel (VI) umfasst:

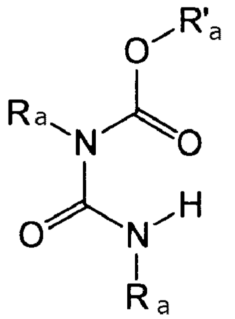

(VI)

wobei in der allgemeinen Formel (VI) Ra eine organische Gruppe darstellt, wobei mindestens eines der mehreren Ra eine Gruppe der allgemeinen Formel (VII) darstellt, wobei die mehreren Ra identisch oder voneinander verschieden sind, und R'a eine Restgruppe darstellt, die durch Entfernen einer Hydroxylgruppe von einem einwertigen oder mehrwertigen Alkohol erhalten wurde,

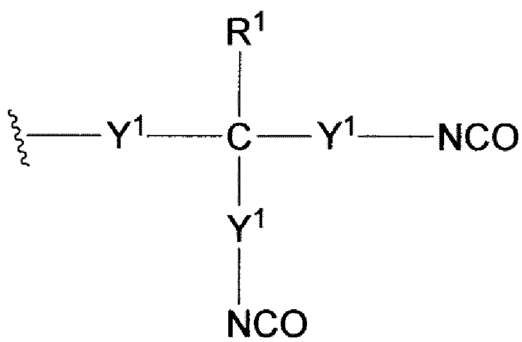

(VII)

wobei in der allgemeinen Formel (VII) mehrere $Y^1$ jeweils unabhängig voneinander eine Einfachbindung oder eine zweibindige C1-20-Kohlenwasserstoffgruppe, welche mindestens eine, ausgewählt aus der Gruppe bestehend aus einer Esterstruktur und einer Etherstruktur, aufweisen kann, darstellen, wobei die mehreren $Y^1$ identisch oder voneinander verschieden sind, mindestens eines der mehreren $Y^1$ eine Esterstruktur aufweist, $R^1$ ein Wasserstoffatom oder eine einbindige C1-12-Kohlenwasserstoffgruppe darstellt und die Wellenlinie eine

Bindungsstelle darstellt.

5. Wässrige Dispersion der Isocyanatzusammensetzung nach einem der Ansprüche 1 bis 4, die weiterhin ein organisches Lösungsmittel enthält.

6. Wässrige Dispersion der Isocyanatzusammensetzung nach Anspruch 5, wobei die Wasserlöslichkeit des organischen Lösungsmittels bei 20°C 5 Massen-% oder mehr ist.

7. Wässrige Dispersion der Isocyanatzusammensetzung nach einem der Ansprüche 1 bis 6, wobei die Isocyanatzusammensetzung weiterhin ein Polyisocyanat umfasst, welches durch Polymerisieren von Diisocyanaten mit einer aliphatischen, alicyclischen oder aromatischen Isocyanatgruppe erhalten wurde.

8. Verfahren zur Herstellung einer wässrigen Dispersion einer Isocyanatzusammensetzung nach einem der Ansprüche 1 bis 7, umfassend einen Schritt, bei dem eine Isocyanatzusammensetzung tropfenweise in Wasser gegeben wird, während mit einem Rührblatt gerührt wird.

9. Beschichtungszusammensetzung, die eine wässrige Dispersion einer Isocyanatzusammensetzung nach einem der Ansprüche 1 bis 7 und ein Polyol enthält.

10. Beschichtungsfilm/folie, der/die durch Härten einer Beschichtungszusammensetzung nach Anspruch 9 gebildet wurde.

**Revendications**

1. Dispersion aqueuse d'une composition d'isocyanate comprenant : de l'eau ; et la composition d'isocyanate dispersée dans l'eau,

dans laquelle la composition d'isocyanate comprend au moins un choisi dans le groupe constitué d'un composé triisocyanate de formule générale (IV) et d'un composé diisocyanate de formule générale (V), et
la composition d'isocyanate a un diamètre moyen en volume de particule de dispersion de 200 nm à 8 000 nm tel que déterminé dans < Diamètre moyen de particule de dispersion > dans la description,

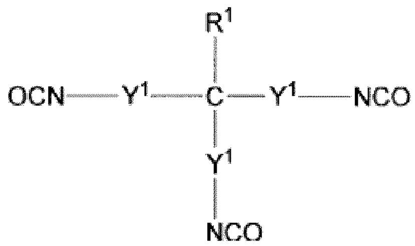

(IV)

dans la formule générale (IV), une pluralité de $Y^1$ représentent chacun indépendamment une liaison simple ou un groupe hydrocarboné divalent en C1-20 qui peut avoir au moins une choisie dans le groupe constitué d'une structure ester et d'une structure éther, la pluralité de $Y^1$ sont identiques les uns aux autres ou différents les uns des autres, et $R^1$ représente un atome d'hydrogène ou un groupe hydrocarboné monovalent en C1-12,

$$\mathbf{OCN\text{-}Y^2\text{-}NCO} \quad (V)$$

dans la formule générale (V), $Y^2$ représente un groupe hydrocarboné divalent en C1-20 ayant une structure ester.

2. Dispersion aqueuse de la composition d'isocyanate selon la revendication 1, dans laquelle la composition d'isocyanate comprend le composé triisocyanate de formule générale (IV), et au moins l'un de la pluralité de $Y^1$ a une structure ester.

3. Dispersion aqueuse de la composition d'isocyanate selon la revendication 1 ou 2, dans laquelle un groupe hydrophile est ajouté à une partie des groupes isocyanate du composé triisocyanate de formule générale (IV) ou du composé diisocyanate de formule générale (V), et une teneur du groupe hydrophile par rapport à une quantité totale de la

composition d'isocyanate est de 0,5 % en masse à 5 % en masse.

**4.** Dispersion aqueuse de la composition d'isocyanate selon l'une quelconque des revendications 1 à 3, dans laquelle la composition d'isocyanate comprend en outre un composé polyisocyanate ayant une structure allophanate de formule générale (VI) :

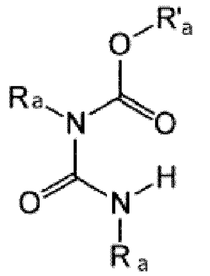

(VI)

dans la formule générale (VI), Ra représente un groupe organique, au moins l'un d'une pluralité de Ra représente un groupe de formule générale (VII), la pluralité de Ra sont identiques les uns aux autres ou différents les uns des autres, R'a représente un groupe résiduel obtenu en retirant un groupe hydroxyle d'un alcool monovalent ou de valence supérieure,

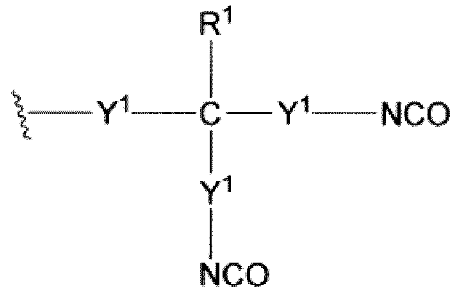

(VII)

dans la formule générale (VII), a pluralité de $Y^1$ représentent chacun indépendamment une liaison simple, ou un groupe hydrocarboné divalent en C1-20 qui peut avoir au moins une choisie dans le groupe constitué d'une structure ester et d'une structure éther, la pluralité de $Y^1$ sont identiques les uns aux autres ou différents les uns des autres, au moins l'un de la pluralité de $Y^1$ a une structure ester, $R^1$ représente un atome d'hydrogène ou un groupe hydrocarboné monovalent en C1-12, et une ligne ondulée représente un site de liaison.

**5.** Dispersion aqueuse de la composition d'isocyanate selon l'une quelconque des revendications 1 à 4, comprenant en outre un solvant organique.

**6.** Dispersion aqueuse de la composition d'isocyanate selon la revendication 5, dans laquelle une solubilité aqueuse du solvant organique à 20 °C est de 5 % en masse ou plus.

**7.** Dispersion aqueuse de la composition d'isocyanate selon l'une quelconque des revendications 1 à 6, dans laquelle la composition d'isocyanate comprend en outre un polyisocyanate obtenu par polymérisation de diisocyanates ayant un groupe isocyanate aliphatique, alicyclique ou aromatique.

**8.** Procédé de production d'une dispersion aqueuse d'une composition d'isocyanate selon l'une quelconque des revendications 1 à 7, comprenant une étape dans laquelle une composition d'isocyanate est ajoutée goutte à goutte dans de l'eau tout en réalisant une agitation en utilisant une lame d'agitation.

**9.** Composition de revêtement comprenant une dispersion aqueuse de composition d'isocyanate selon l'une quelconque des revendications 1 à 7, et un polyol.

**10.** Film de revêtement formé par durcissement d'une composition de revêtement selon la revendication 9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP HEI05222007 A
- JP 3055197 B
- JP 5178200 B
- JP HEI05222150 A
- JP HEI09328654 A
- JP 2000044649 A
- JP 2003073447 A
- JP HEI11286649 A
- JP 2000044649 B
- WO 2004078819 A
- JP SHO57198760 A
- JP HEI41033 B
- JP SHO53135931 A
- JP SHO5734107 A
- JP SHO61215311 B